# EUROPEAN PATENT APPLICATION

(11) **EP 4 825 230 A1**
(43) Date of publication of application: **21.10.2026**
(21) Application number: 23961457.1
(22) Date of filing: 13.12.2023
(51) Int. Cl.: A24F 40/53, A24F 40/85

(54) **POWER SUPPLY UNIT FOR AEROSOL GENERATING DEVICE**

(71) Applicant: Japan Tobacco Inc., Tokyo 105-6927 (JP)
(72) Inventor: NAGAHAMA Toru, Tokyo 130-8603 (JP)
(74) Representative: Hoffmann Eitle
(86) International application number: PCT/JP2023/044702
(87) International publication number: WO 2025/126391

(57) **Abstract**

A power supply unit of an inhalation device that generates an aerosol from an aerosol source, comprising: a positive terminal (90a), a negative terminal (90b), and a temperature terminal (90c), which are examples of connections to which a power source unit (111) configured to store power and that is configured to be detachable from the power supply unit is connected; and a control unit (116) that performs a predetermined operation check when the power source unit (111) connected to these connections is replaced, and controls the operation of the power source unit based on the result of the operation check. In the operation check, the control unit (116) obtains information about the power source unit (111) after replacement and, based on this information, the control unit (116) detects faults with the power source unit (111) after replacement, and/or detects faults with the positive terminal (90a), the negative terminal (90b) or the temperature terminal (90c), which are examples of connection portions connected to the power source unit (111) after replacement.

## Description

### TECHNICAL FIELD

The present disclosure relates to a power supply unit for an aerosol generating device.

### BACKGROUND ART

Inhalation devices that generate an aerosol with added flavor components and allow a user to inhale the generated aerosol, for example, are conventionally known. This kind of inhalation device typically generates the aerosol by heating an aerosol source by means of a heating unit, which is an electrically-resistive or inductively-heated heater, by supplying the heating unit with power from a power source such as a rechargeable battery.

In the following Patent Document 1, an electronic tobacco device that enables the power source to be replaced is disclosed. It is also disclosed that this electronic tobacco device is provided with a reverse battery protector to protect the power source and control assembly from a reverse current that may be generated if the polarity of the power source is installed reversed.

### CITATION LIST

### PATENT LITERATURE

PTL 1: WO 2014/163664 A1

### SUMMARY OF INVENTION

### TECHNICAL PROBLEM

In a power supply unit of an aerosol generating device, if the power source is made removable to enable a user to replace the power source, a suitable power source may not be properly mounted. If the installed power source is not suitable or the power source is not properly mounted, operating the power supply unit as normal may lead to failure of the power supply unit. For this reason, it is desirable for the power supply unit to detect whether an appropriate power source is properly mounted, and to operate appropriately.

The present disclosure discloses a power supply unit of an aerosol generating device that is capable of detecting a fault with the power source unit after replacement and/or a fault with the connection portion of the power supply unit connected to the power source unit after replacement, and can perform operations based on the detection results.

### SOLUTION TO PROBLEM

The present disclosure relates to
a power supply unit for an aerosol generating device for generating an aerosol by heating an aerosol source, the power supply unit comprising:
a connection portion to which is connected a power source unit configured to store power and configured to be attachable to and detachable from the power supply unit; and
a control unit that performs a predetermined operation check and operation to control the power supply unit based on the result of an operation check when the power source unit connected to the connection portion is replaced,
characterized in that
in the operation check, the control unit is configured to
obtain information about the power source unit after replacement, and
detect, based on the information relating to the power source unit after replacement, faults relating to the power source unit after replacement and/or faults relating to the connection portion connected to the power source unit after replacement.

### ADVANTAGEOUS EFFECTS OF INVENTION

According to a power supply unit of the aerosol generating device of the present disclosure, when a power source unit configured to store power and to be attachable to and detachable from the power supply unit is replaced, a fault with the power source unit after replacement and/or a fault with the connection portion of the power supply unit connected to the power source unit after replacement is detected, and an action can be taken based on the detection result.

### BRIEF DESCRIPTION OF DRAWINGS

Fig. 1 is a schematic diagram schematically illustrating a first configuration example of an inhalation device;
Fig. 2 is a schematic diagram schematically illustrating a second configuration example of an inhalation device;
Fig. 3 is a diagram showing an example of the external configuration of an inhalation device 100;
Fig. 4 is a diagram illustrating a first example of an attachment/detachment aspect of a power source unit 111;
Fig. 5 is a diagram illustrating a second example of an attachment/detachment aspect of the power source unit 111;
Fig. 6 is a diagram illustrating a third example of an attachment/detachment aspect of the power source unit 111;
Fig. 7 is a diagram showing an example of the configuration of the power source unit 111 and a control unit 116;
Fig. 8 is a diagram showing an example of connected power source information acquired by an MCU 1161;
Fig. 9 is a flowchart showing an example of operation check performed by the MCU 1161;
Fig. 10 is a diagram showing an example of a heating authorization threshold value table TBL defining heating authorization threshold values;
Fig. 11A is a diagram (part 1) showing an example of reset process performed by the MCU 1161;
Fig. 11B is a diagram (part 2) showing an example of reset process performed by the MCU 1161;
Fig. 11C is a diagram (part 3) showing an example of reset process performed by the MCU 1161;
Fig. 12 is a flowchart showing an example of control flow performed by the MCU 1161; and
Fig. 13 is a diagram showing an example of the information processing system for updating the firmware of the power supply unit 110.

### DESCRIPTION OF EMBODIMENTS

Embodiments of the power supply unit for an aerosol generating device according to the present disclosure will be described in detail below with reference to the drawings. The drawings should be viewed in the orientation of the reference signs. The embodiment described below is an exemplary case in which the aerosol generating device according to the present disclosure is applied to an inhalation device. It should be noted that not all of the features described in the following embodiment are essential for the aerosol generating device of the present disclosure. In addition, two or more of the plurality of features described in the following embodiment may be combined in any way. Furthermore, hereinafter, identical or similar elements may be assigned identical or similar reference signs, and descriptions thereof may be omitted or simplified as appropriate.

### 1. Configuration Example of Inhalation Device

The inhalation device of this embodiment, which constitutes an example of the aerosol generating device of the present disclosure, is a device for generating a substance to be inhaled by a user. Hereinafter, the substance generated by the inhalation device is be described as being an aerosol. Alternatively, the substance generated by the inhalation device may be a gas.

### 1-1. First Configuration Example of Inhalation Device

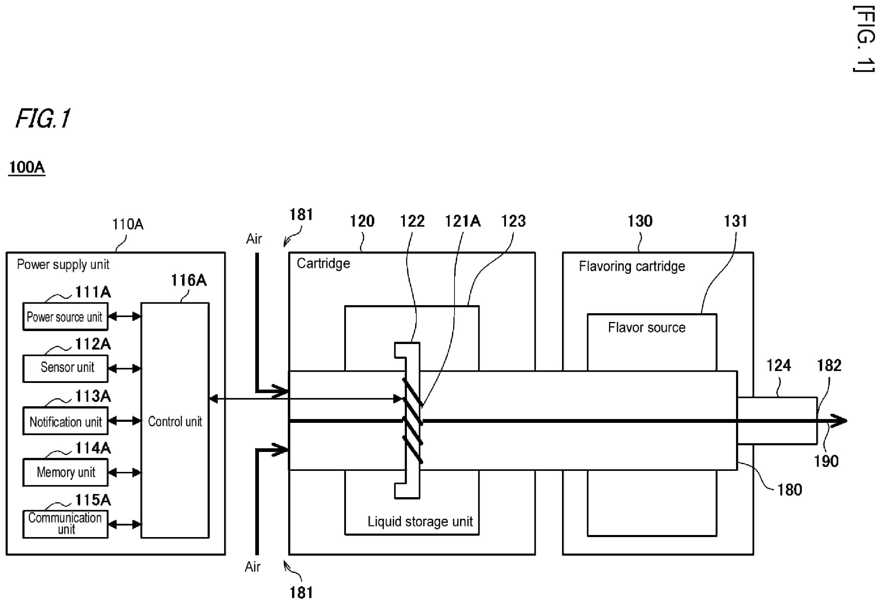

Fig. 1 is a schematic diagram schematically showing a first configuration example of an inhalation device. As shown in Fig. 1, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 comprises a flavoring source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. Furthermore, the power source unit 111A is configured to be chargeable by means of power received from an external power source. The external power source may for example be an AC adapter (AC: alternating current), a mobile charger, a PC (personal computer), or the like. The power source unit 111A may be configured, for example, by a rechargeable battery such as a lithium ion secondary battery.

The power source unit 111A is attachable to and detachable from the power supply unit 110A. In other words, the inhalation device 100A enables the user to replace the power source unit 111A as needed by removing the old power source unit 111A from the power supply unit 110A and installing a new power source unit 111A into the power supply unit 110A. A specific example of the configuration of a power source unit 111, including the power source unit 111A, will be described later, so explanation is omitted here.

The sensor unit 112A acquires various types of information relating to the inhalation device 100A. The sensor unit 112A is configured by, for example, a pressure sensor such as a capacitor microphone, a flow rate sensor or a temperature sensor, and so on, and acquires values associated with inhalation by a user.

As an example, the sensor unit 112A may include a pressure sensor (also referred to as a "puff sensor") capable of detecting a change in pressure (also referred to hereinafter as "internal pressure") in the inhalation device 100A caused by inhalation by the user. As another example, the sensor unit 112A may include a flow sensor capable of detecting a flow rate caused by inhalation by the user (hereinafter simply referred to as "flow rate"). As another example, the sensor unit 112A may include a temperature sensor (also referred to as a "puff thermistor") capable of measuring the temperature of the heating unit 121A or the temperature around the heating unit 121A.

Furthermore, the sensor unit 112A may include a voltage sensor capable of measuring the terminal voltage of the power source unit 111A. The sensor unit 112A may further include a temperature sensor capable of measuring the temperature of the power source unit 111A.

Furthermore, the sensor unit 112A may comprise an input device, such as an operation button or a switch, for accepting input of information from the user.

The notification unit 113A notifies the user of information. The notification unit 113A may, for example, be configured by a light-emitting device that emits light, a display device that displays images, a sound output device that outputs sound, or a vibration device that vibrates, etc. Here, the light-emitting device may be realized by a light-emitting element such as an LED (Light-Emitting Diode), and a drive circuit for causing the light-emitting element to emit light, and the like. Furthermore, the display device may be a liquid crystal display or an OLED display (OLED: Organic Light-Emitting Diode). The sound output device may be a speaker, for example. The vibration device may be a vibrator comprising a motor and an eccentric weight attached to a rotary shaft of the motor, for example.

The memory unit 114A stores various information (e.g., programs and data) for operation of the inhalation device 100A. The memory unit 114A may be configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area).

The control unit 116A functions as an arithmetic processing device and a control device, and controls overall operation within the inhalation device 100A in accordance with various programs stored in the memory unit 114A, etc. For example, the control unit 116A controls the supply of electricity (power supply) from the power source unit 111A to each component (e.g., the heating unit 121A to be described later), and controls charging of the power source unit 111A by means of power received from an external power source. The control unit 116A is realized, for example, by electronic circuitry that includes a Central Processing Unit (CPU) or a microprocessor (also referred to as a "Micro Controller Unit (MCU)").

The liquid storage portion 123 stores an aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol, for example. The heating unit 121A is formed by any material, such as a metal or polyimide, in any shape, such as coiled, film-like or blade-like. In the example shown in Fig. 1, the heating portion 121A is configured as a coil obtained by winding a heat generating resistor such as nichrome or stainless steel, and is wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A.

As an example, the supply of electricity to the heating unit 121A from the power source unit 111A may be implemented when the sensor unit 112A has detected a heating request from the user. The heating request is, for example, that the user has started inhalation and/or predetermined information has been entered. The supply of electricity to the heating unit 121A may then be stopped if the sensor unit 112A detects that the user has finished inhaling and/or that predetermined information has been input, or if a predetermined amount of time has elapsed.

Moreover, the heating unit 121A may be configured to generate an aerosol by means of vibration or induction heating. When the aerosol is generated by means of vibration, the inhalation device 100A comprises a vibration unit as the heating unit 121A. For example, the vibration unit is configured by a plate-shaped member comprising a piezoelectric ceramic functioning as an ultrasonic vibrator. When the vibration unit vibrates, the aerosol source which has been guided to a surface of the vibration unit by means of the liquid guiding portion 122 is then atomized by means of ultrasound generated as the vibration unit vibrates, thereby generating the aerosol.

Furthermore, when the aerosol is generated by means of induction heating, the inhalation device 100A comprises a susceptor and an electromagnetic induction source as the heating unit 121A. The susceptor is made of an electrically conductive material, such as a metal, and generates heat by means of electromagnetic induction. Furthermore, the susceptor is disposed adjacent to the liquid guiding portion 122. As an example, the susceptor is formed by a metallic conducting wire and is wound around the liquid guiding portion 122. The electromagnetic induction source causes the susceptor to generate heat by electromagnetic induction. The electromagnetic induction source is formed by a coiled conducting wire, for example, and generates a magnetic field when supplied with an AC current from the power source unit 111A. When a magnetic field is generated, eddy currents are generated in the susceptor, and Joule heat is generated. The aerosol source held in the liquid guiding portion 122 is then heated by this Joule heat and atomized, generating the aerosol.

The flavor source 131 is a component for imparting a flavor component to the aerosol. The flavor source 131 includes tobacco-derived or non-tobacco-derived flavor components. The aerosol source 131 may be, for example, a tobacco-derived substance such as cut tobacco, or a processed product obtained by molding a tobacco raw material into a granular form, a sheet form, or a powder form. Furthermore, the flavor source 131 may also include non-tobacco-derived materials made from plants other than tobacco (e.g., mint and herbs, etc.). As one example, the flavor source 131 may contain a flavoring component such as menthol. Furthermore, the flavor source 131 may be a stick-type member. When the inhalation device 100A is a medical inhaler, the flavor source 131 may contain a drug to be inhaled by a patient. It should be noted that the flavor source 131 is not limited to a solid, and it may be a liquid containing flavor components, for example a polyhydric alcohol such as glycerin or propylene glycol, and water. Furthermore, the flavor source 131 may be disposed inside a container such as a capsule.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example, may be adopted.

As an example, the inhalation device 100A need not include the flavoring cartridge 130. In this case, the cartridge 120 is provided with the mouthpiece 124.

As another example, the inhalation device 100A may further include a flavor source heating unit (not shown on the drawings) for heating the flavor source 131. The flavor source heating unit is configured in a film shape and is disposed so as to cover the outer periphery of the flavor source 131, for example. The flavor source heating unit then generates heat when supplied with power from the power source unit 111A, heating the flavor source 131 from the outer periphery thereof. It should be noted that the flavor source heating unit may also be configured with a blade-like form, piercing the flavor source 131 to heat the flavor source 131 from the inside, for example. Furthermore, the flavor source heating unit may be configured to heat the flavor source 131 by means of vibration or induction heating. Providing such a flavor source heating unit makes it possible to increase the temperature of the flavor source 131 and to increase the amount of flavor component added to the aerosol, as compared with a case in which the flavor source heating unit is not provided.

Furthermore, as another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### 1-2. Second Configuration Example of Inhalation Device

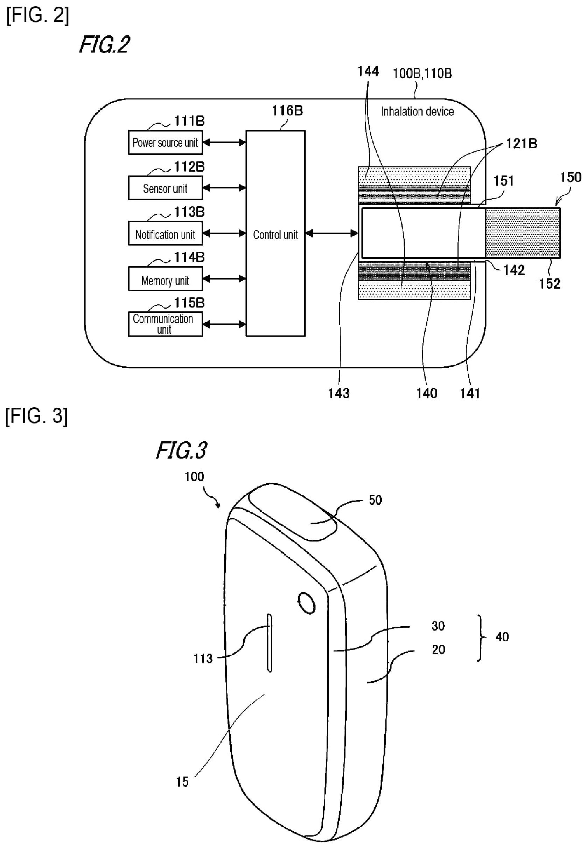

Fig. 2 is a schematic diagram schematically showing a second configuration example of an inhalation device. As shown in Fig. 2, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A described above. Moreover, in the case of the inhalation device 100B shown in Fig. 2, the inhalation device 100B itself may also be referred to as the power supply unit 110B. That is, in this embodiment, the power source unit 111B is removably provided in the power supply unit 110B (in other words, the inhalation device 100B) so that the user can replace the power source unit 111B as required.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such a polyhydric alcohol such as glycerin or propylene glycol, or water, containing a tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path, which is not illustrated on the drawings, and reaches the inside of the user's mouth together with the aerosol generated from the substrate portion 151.

In the example shown in Fig. 2, the heating unit 121B is configured as a film heater formed by laying out a conductive track afforded by a heating resistive element having a correlation between electrical resistance value and temperature, and is arranged to cover the outer circumference of the accommodating portion 140. Then, when the heating unit 121B generates heat, the substrate portion 151 of the stick-type substrate 150 is heated from the outer periphery, generating the aerosol. It should be noted that a heat generating resistor the same as that of the heating unit 121A described above may be used as the heat generating resistor of the heating unit 121B.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example, may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor which generates heat by means of induction heating may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

Note that, hereinafter, the inhalation device 100A and the inhalation device 100B described above will also be referred to, without distinction, as the "inhalation device 100", and the power supply units 110A and 110B will be referred to simply as "power supply unit 110" without distinction. Similarly, the power source unit 111A and power source unit 111B may be referred to as the "power source unit 111," the sensor unit 112A and sensor unit 112B as the "sensor unit 112," the notification unit 113A and notification unit 113B as the "notification unit 113," the memory unit 114A and memory unit 114B as the "memory unit 114," the communication unit 115A and communication unit 115B as the "communication unit 115," the control unit 116A and the control unit 116B as the "control unit 116," and the heating unit 121A and heating unit 121B as the "heating unit 121."

### 2. Example of External Configuration of the Inhalation Device

Fig. 3 is a diagram showing an example of the external configuration of the inhalation device 100. As shown in Fig. 3, the inhalation device 100 comprises, for example, a case 20 and a shutter 50 slidably attached to the case 20.

The case 20 houses the power supply unit 110 of the inhalation device 100. Although details will be described later, the case 20 houses, for example, the power source unit 111 mounted on the power supply unit 110, and a main body side board unit 90, and so on,. provided with an MCU, and so on, to realize the control unit 116.

The case 20 is also fitted with a panel 30. The panel 30 is attached to the case 20 to configure an outermost housing 40 of the aerosol generating device 100. By including the panel 30, the inhalation device 100 can buffer the heat released to the outside even when the power supply unit 110 generates heat. In other words, the panel 30 functions to insulate heat generated by the power supply unit 110. Furthermore, the panel 30 is formed so that the surface is substantially curved, and defines the internal space together with the surface of the case 20 when attached to the case 20.

When a user presses on the surface of the panel 30 with their fingertips, the panel 30 deforms to form an indentation toward the case 20. As a result of this deformation of the panel 30, a projection provided on the surface of the panel 30 comes into contact with an operation button (not shown on the drawings) provided on the surface of the case 20, thereby pressing the operation button. In other words, the finger-pressed portion of the surface of the panel 30 constitutes an operation portion 15 that receives the user's operation. Also, in Fig. 3, the portion denoted by the reference sign 113 is a portion through which light from a light-emitting device provided inside the case 20 passes, and is an example of the previously described notification unit 113.

The shutter 50 moves between a predetermined closed position and open position in response to user action. Access to the interior of the case 20 (in other words, the inhalation device 100) is restricted when the shutter 50 is in the closed position, and access to the interior of the case 20 is permitted when the shutter 50 is in the open position. On the other hand, when the shutter 50 is in the open position, the stick-type substrate 150 is allowed to access the accommodating portion 140.

### 3. Insertion and Removal of the Power Source Unit

As previously described, in the inhalation device 100, the power source unit 111 is removably provided with respect to the power supply unit 110. Examples of aspects for insertion and removal of the power source unit 111 will now be described in detail. It should be noted that in the inhalation device 100, the insertion and removal direction of the stick-type substrate 150 relative to the inhalation device 100 is the vertical direction, and in the inhalation device 100, the side in which the stick-type substrate 150 is inserted is defined as the upper side. In other words, the stick-type substrate 150 is inserted into the inhalation device 100 from above. Also, the direction perpendicular to the vertical direction may be called the transverse direction, and a surface facing the transverse direction may be called a side surface.

Also, in the following, first to third examples of insertion and removal aspects of the power source unit 111 will be described, but the present disclosure is not limited to these examples. In other words, the power source unit 111 may be removably provided in the power supply unit 110 by aspects other than the first to third examples described below.

### 3-1. First Example of an Insertion and Removal Aspect of the Power Source Unit

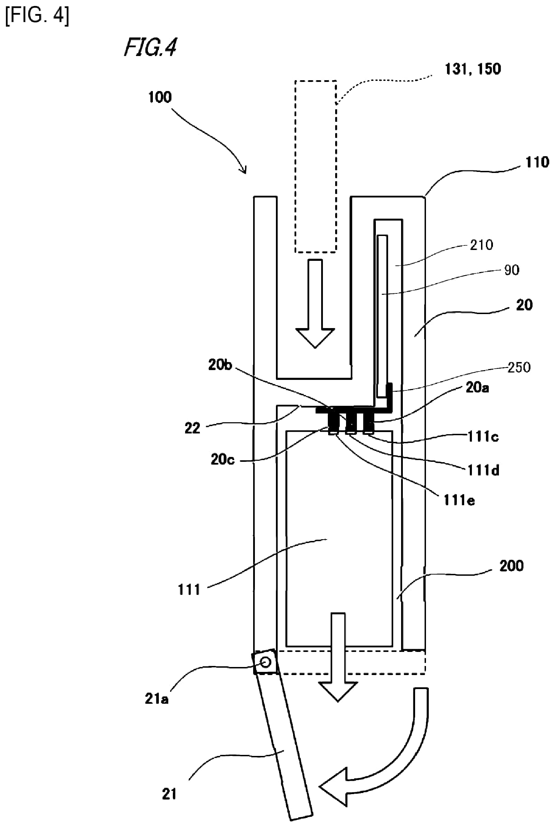

Fig. 4 is a diagram illustrating a first example of an insertion/removal aspect of the power source unit 111. As shown in Fig. 4, the case 20 has a bottom wall portion 21 constituting at least a part of the lower surface of the case 20. The bottom wall portion 21 is provided in the case 20 so that it can be opened and closed about the axis of a hinge 21a that extends in a lateral direction.

In the lower region of the case 20, a power supply accommodating portion 200 is formed that can accommodate the power source unit 111. When the bottom wall portion 21 is opened, the power supply accommodating portion 200 is in communication with the outside of the case 20, allowing the power source unit 111 to be inserted into the power supply accommodating portion 200.

A board accommodating portion 210 is also formed in the upper region of the case 20. The board accommodating portion 210 houses the main body side board unit 90 (described below), which comprises an IC (Integrated Circuit) or the like constituting the aforementioned control unit 116. The main body side substrate unit 90 is electrically connected to the power source unit 111 accommodated in the power supply storage portion 200, for example via a flexible cable 250. This enables power to be supplied to the main body side board unit 90 from the power supply unit 110 (in other words the power source unit 111) accommodated in the power supply accommodating portion 200.

Specifically, the case 20 includes a positive terminal connection 20a, a negative terminal connection 20b, and a temperature connection 20c corresponding to a positive electrode terminal 111c, a negative electrode terminal 111d, and a temperature terminal 111e provided on the power source unit 111. In the example shown in Fig. 4, the positive electrode terminal 111c, the negative electrode terminal 111d and the temperature terminal 111e of the power source unit 111 are all provided on an upper surface of the power source unit 111, and the positive terminal connection 20a, the negative terminal connection 20b, and the temperature connection 20c of the case 20 are provided in a top wall portion 22 of the power supply accommodating portion 200.

Details of the positive electrode terminal 111c, negative electrode terminal 111d and temperature terminal 111e of the power source unit 111 will be described later, so the description will be omitted here. In the following, the positive terminal connection 20a, negative terminal connection 20b and temperature connection 20c may be collectively referred to as "connection 20x." The connection 20x is an example of a connection provided by a power supply unit of the aerosol generating device of the present disclosure.

When accommodated in the power supply accommodating portion 200, the power source unit 111 is held by the bottom wall portion 21 and the top wall portion 22 of the power supply accommodating portion 200. Also, the positive electrode terminal 111c of the power source unit 111 is maintained electrically connected to the positive terminal connection 20a of the case 20, the negative electrode terminal 111d is maintained electrically connected to the negative terminal connection 20b, and the temperature terminal 111e is maintained electrically connected to the temperature connection 20c.

Also, when the bottom wall portion 21 is opened while the power source unit 111 is housed in the power supply accommodating portion 200, the power supply accommodating portion 200 is in communication with the outside of the case 20, making it possible to remove the power source unit 111 from the power supply accommodating portion 200.

### 3-2.Second Example of an Insertion and Removal Aspect of the Power Source Unit

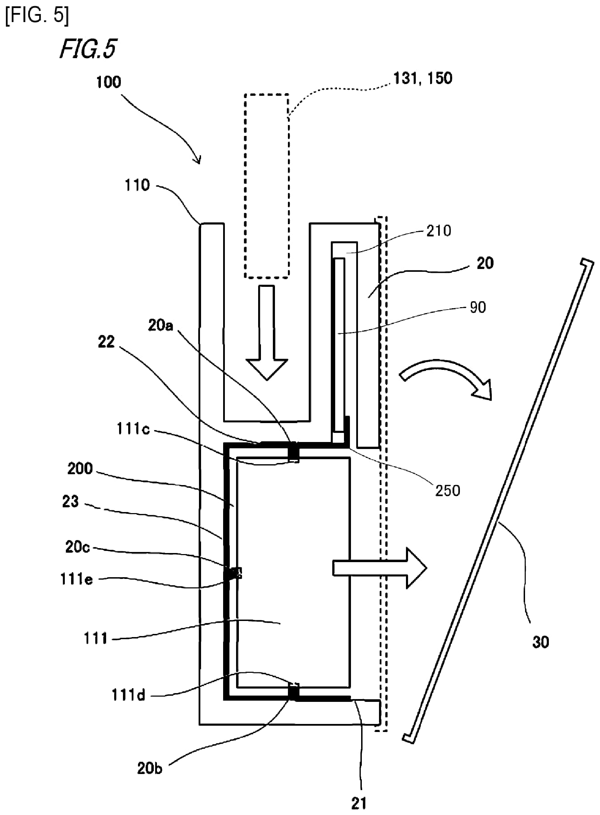

Fig. 5 is a diagram illustrating a second example of an insertion/removal aspect of the power source unit 111. Note that, in this section, the focus is on the areas that differ from those described in Fig. 4, and the areas that are common to those described in Fig. 4 will be omitted or simplified as appropriate.

In the example shown in Fig. 5, when the previously described panel 30 is removed from the case 20, the power supply accommodating portion 200 is in communication with the outside of the case 20, allowing the power source unit 111 to be inserted into the power supply accommodating portion 200 from the transverse direction of the case 20.

In the example shown in Figure 5, the positive electrode terminal 111c is provided on the upper surface of the power source unit 111, the negative electrode terminal 111d on the lower surface of the power source unit 111, and the temperature terminal 111e on the side surface of the power source unit 111. For this reason, the positive terminal connection 20a is provided in the upper wall portion 22 of the power supply accommodating portion 200 corresponding to the positive electrode terminal 111c, the negative terminal connection 20b in the bottom wall portion 21 of the power supply accommodating portion 200 corresponding to the negative electrode terminal 111d, and the temperature connection 20c in a side wall portion 23 of the power supply accommodating portion 200 corresponding to the temperature terminal 111e.

Also, in the example shown in Fig. 5, when the panel 30 is removed from the case 20 while the power source unit 111 is housed in the power supply accommodating portion 200, the power supply accommodating portion 200 is in communication with the outside of the case 20, making it possible to remove the power source unit 111 from the power supply accommodating portion 200.

### 3-3.Third Example of an Insertion and Removal Aspect of the Power Supply Unit

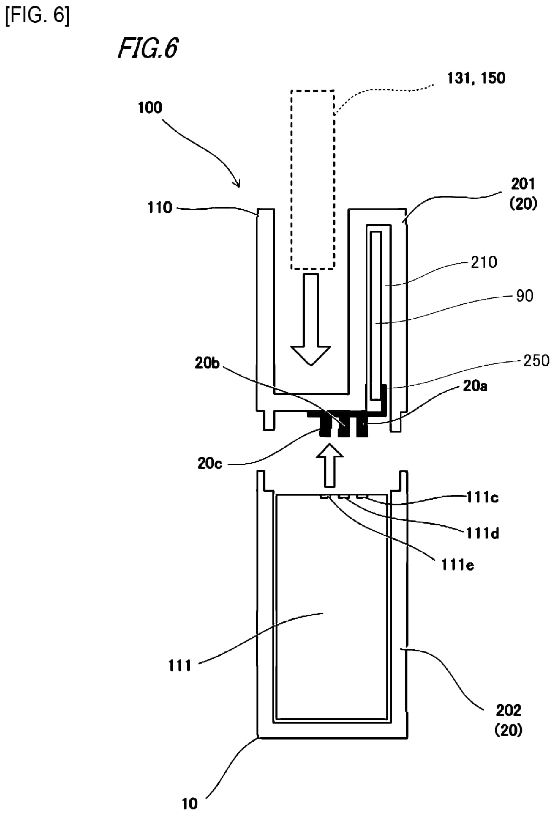

Fig. 6 is a diagram illustrating a third example of an insertion/removal aspect of the power source unit 111. The focus here is on the areas that differ from those described in Fig. 4 or 5, and the areas that are common to those described in Fig. 4 or 5 will be omitted or simplified as appropriate.

In the example shown in Fig. 6, the case 20 comprises a top case 201 constituting the outer packaging of the upper part in the inhalation device 100 and a bottom case 202 constituting the outer packaging of the lower part in the inhalation device 100.

The bottom case 202 has an open top surface and houses the power source unit 111 inside. In this way, in the example shown in Fig. 6, the power source unit 111 and the bottom case 202 is a modularized battery pack 10.

The battery pack 10 is attached to the top case 201 from below. By way of example, both the top case 201 and the bottom case 202 have a substantially cylindrical shape extending vertically, a threaded groove is machined into an outer circumferential surface of one of either the lower end of the top case 201 and the upper end of the bottom case 202, and one of the inner circumferential surface of the upper end of the bottom case 202 and the lower end of the top case 201. The lower end of the upper case 201 and the upper end of the lower case 202 are screwed together, and the battery pack 10 is attached to the top case 201.

As another example, the battery pack 10 may be attached to the top case 201 by providing a magnet at one of the lower end of the top case 201 and the upper end of the bottom case 202, with either the upper end of the bottom case 202 or the lower end of the top case 201 being formed of ferromagnetic material, so that the lower end of the top case 201 and the upper end of the bottom case 202 are attracted by the magnet. As yet another example, the bottom case 202 may have a locking portion such as a claw, and the battery pack 10 may be attached to the top case 201 by the locking portion locking the top case 201.

With the battery pack 10 attached to the top case 201, the power source unit 111 is held with the positive electrode terminal 111c in electrical connection with the positive terminal connection 20a, the negative electrode terminal 111d in electrical connection with the negative terminal connection 20b, and the temperature terminal 111e in electrical connection with the temperature terminal connection 20c.

### 4. Configuration Example of Power Source Unit and Control Unit

### 4-1. Example of Configuration of Power Source Unit

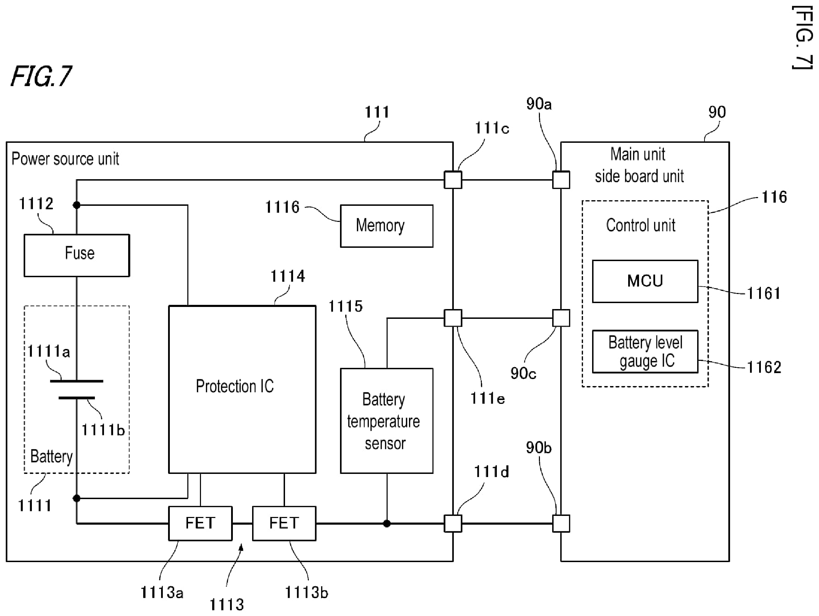

Fig. 7 is a diagram showing an example of the configuration of the power source unit 111 and control unit 116. As shown in Fig. 7, the power source unit 111 comprises, for example, a battery 1111, a fuse 1112, a switch circuit 1113, a protection IC 1114, a battery temperature sensor 1115, the positive electrode terminal 111c, the negative electrode terminal 111d, and the temperature terminal 111e.

The battery 1111 is a secondary battery comprising a positive terminal 1111a and a negative terminal 1111b, for example configured to be capable of outputting a terminal voltage of around 4 [V] between the positive terminal 1111a and the negative terminal 1111b. Various secondary batteries such as, for example, a lithium-ion secondary battery or a nickel-metal hydride battery can be employed as the battery 1111.

The positive terminal 1111a of the battery 1111 is connected via the fuse 1112 to the positive electrode terminal 111c, which is an input/output terminal on the high potential side of the power source unit 111. Also, the negative terminal 1111b of the battery 1111 is connected via the switch circuit 1113 to the negative electrode terminal 111d, which is an input/output terminal on the low potential side of the power source unit 111. Thus, the power source unit 111 can output the terminal voltage of the battery 1111 as the terminal voltage between the positive electrode terminal 111c and the negative electrode terminal 111d. Hereinafter, the output voltage of the power source unit 111 is also referred to as the "power source voltage Vbat".

When the power source unit 111 is properly seated in the power supply unit 110, the positive electrode terminal 111c of the power source unit 111 is electrically connected to a positive terminal 90a of the power supply unit 110 (i.e. the inhalation device 100), and the negative electrode terminal 111d of the power source unit 111 to a negative terminal 90b of the power supply unit 110 respectively.

In the present embodiment, the positive terminal 90a and negative terminal 90b of the power supply unit 110 are provided on the main body side board unit 90, which is configured by mounting various electronic components including the IC constituting the control unit 116 on a printed wiring board (PWB). The IC constituting the control unit 116 may include an MCU 1161 and a battery level gauge IC 1162, or the like, as described below.

The fuse 1112 is a protective element that blows to break the electrical connection between the positive terminal 1111a and the positive electrode terminal 111c when a current flow greater than or equal to a predetermined value is present. By providing such a fuse 1112, it is possible to prevent overcurrent being output from the power source unit 111 even if an overcurrent is output from the battery 1111, which is a current greater than or equal to a predetermined value, and to protect the main body side board unit 90 from overcurrent.

The switch circuitry 1113 is a circuit that acts as a switch to turn on and off charging and discharging of the power source unit 111 (more specifically the battery 1111). In this embodiment, the switch circuitry 1113 is configured in series connection between a first FET 1113a and a second FET 1113b.

The first FET 1113a and the second FET 1113b are each N-channel MOSFETs (Metal-Oxide-Semiconductor Field Effect Transistors). In this case, the source terminal of the first FET 1113a is connected to the negative terminal 1111b of the battery 1111, the drain terminal of the first FET 1113a is connected to the drain terminal of the second FET 1113b, and the gate terminal of the first FET 1113a is connected to the protection IC 1114. Also, the source terminal of the second FET 1113b is connected to the negative electrode terminal 111d, and the gate terminal of the second FET 1113b is connected to the protection IC 1114.

The protection IC 1114 is connected to both the positive terminal 1111a and the negative terminal 1111b of the battery 1111, and is provided to enable the terminal voltage of the battery 1111 to be acquired. The protection IC 1114 then controls the switch circuit 1113 based on the terminal voltage of the battery 1111. In this embodiment, the protection IC 1114 can turn the first FET 1113a on (in other words, conduction state) or off (in other words, interruption state) by controlling the gate voltage of the first FET 1113a. Similarly, the protection IC 1114 can turn the second FET 1113b on or off by controlling the gate voltage of the second FET 1113b.

For example, when charging the power source unit 111 (i.e. the battery 1111), when the terminal voltage of the battery 1111 reaches a predetermined upper limit, the protection IC 1114 switches off the second FET 1113b to stop charging of the power source unit 111. In this way, it is possible to prevent overcharging of the power source unit 111.

Also, if the power source voltage Vbat falls below a predetermined lower limit value when the power source unit 111 is discharging, the protection IC 1114 may turn the first FET 1113a off, thereby stopping the power source unit 111 from discharging. In this way, it is possible to prevent over-discharge of the power source unit 111.

Furthermore, the protection IC 1114 may be configured to control the switch circuit 1113 based on the current value of the current flowing through the conductor connecting the negative terminal 1111b and the negative electrode terminal 111d (in other words, the power line to which the ground potential may be applied).

For example, when the power source unit 111 is charged, if a current exceeding a predetermined value flows in the wire connecting the negative electrode terminal 111d and the negative terminal 1111b, the protection IC 1114 may turn off the second FET 1113b to stop the charging of the power source unit 111. It is therefore possible to protect the power source unit 111 from an overcurrent that may occur when the power source unit 111 is being charged.

In addition, when a current exceeding a predetermined value flows in the conductors connecting the negative electrode terminal 111d and the negative terminal 1111b during discharge from the power source unit 111, the protection IC 1114 may switch off the first FET 1113a to stop discharge from the power source unit 111. In this way, it is possible to protect the main body side board unit 90, and so on, from an overcurrent that may be generated when discharging from the power source unit 111.

The battery temperature sensor 1115 is a temperature sensor that enables the temperature of the power source unit 111 (also referred to hereinafter as "battery temperature Tbat") to be measured. In this embodiment, the battery temperature sensor 1115 is an NTC thermistor composed of a resistor having NTC characteristics, or, a PTC thermistor composed of a resistor having PTC characteristics, and is positioned in close proximity to the battery 1111. One end of the battery temperature sensor 1115 (more specifically the resistor) is then connected to the temperature terminal 111e and the other end to the negative electrode terminal 111d.

When the power source unit 111 is properly seated in the power supply unit 110, the temperature terminal 111e of the power source unit 111 is electrically connected to a temperature terminal 90c of the power supply unit 110 (in other words, the inhalation device 100). Therefore, there is a potential difference between the temperature terminal 90c and the negative terminal 90b of the main body side board unit 90 according to the amount of voltage drop by the battery temperature sensor 1115, which is a thermistor. Note that in this embodiment, the temperature terminal 90c is also provided on the main body side board unit 90, similar to the positive terminal 90a and the negative terminal 90b. The group of terminals of the positive terminal 90a, negative terminal 90b, and temperature terminal 90c of the main body side board unit 90 is another example of connections provided by the power supply unit of the aerosol generating device of the present disclosure.

Also, the power source unit 111 is configured to further comprise, for example, a memory 1116. The memory 1116 is, for example, configured by an Erasable Programmable Read Only Memory (EPROM) or a non-volatile memory such as a flash memory, and stores information indicating the power supply ID, which is an identifier that can uniquely identify the power source unit 111 in which the memory 1116 is provided. Hereinafter, the information indicating the power supply ID is also referred to as "power supply ID information".

The power source unit 111 is configured so that, when the power source unit 111 is properly mounted in the power supply unit 110, the power supply ID information stored in the memory 1116 can be obtained by the control unit 116 of the power supply unit 110 (for example, the MCU 1161).

As an example, when the power source unit 111 is properly mounted in the power supply unit 110, the memory 1116 is electrically connected to a predetermined IC (for example, the MCU 1161) of the ICs constituting the control unit 116 via a signal line, terminals, and so on, that are not shown on the drawings. This allows the predetermined IC to access the memory 1116 to obtain the power supply ID information stored in the memory 1116. As another example, the memory 1116 and the predetermined IC may be provided so that they can communicate via contactless communication such as NFC.

Note that in the examples described here, the power source unit 111 has been configured to include components other than the battery 1111, but there is no limitation to this. For example, the power source unit 111 may be configured solely by the battery 1111, and components other than the battery 1111 may be provided in the power supply unit 110 (for example, the main body side board unit 90). Also, components other than the battery 1111 may be provided in an intermediate member (in other words a relay member) electrically provided between the battery 1111 and the main body side board unit 90. Also, components other than the battery 1111 may be omitted as appropriate.

### 4-2. Example of Configuration of the Control Unit

As shown in Fig. 7,7, the control unit 116 comprises, for example, the MCU 1161 and the battery level gauge IC 1162. The MCU 1161 and the battery level gauge IC 1162 are provided in a communicative state with each other, such as via a signal line that is not shown on the drawings. Each function of the control unit 116 in this embodiment is achieved by the cooperation of a plurality of ICs of the main body side board unit 90, such as the MCU 1161 and the battery level gauge IC 1162, for example. Also, some functions of the control unit 116 may, for example, be realized only by the MCU 1161.

The MCU 1161 is an IC (in other words a computer) that centrally controls the entire power supply unit 110 (in other words, the inhalation device 100). The MCU 1161 controls charging and/or discharging of the power source unit 111 mounted in the power supply unit 110, for example based on information obtained from the battery level gauge IC 1162,and so on, and controls the notification unit 113 (for example, a light emitting device, display, or vibrating device) described previously, to make predetermined notifications. Detailed examples of the control performed by the MCU 1161 will be described later, and will therefore not be described here.

The battery level gauge IC 1162 is an IC that derives the remaining charge of the power source unit 111 mounted in the power supply unit 110, in other words, the power source unit 111 connected to the connection portion 20x (also referred to hereinafter as "remaining battery charge Cbat").

In this embodiment, the battery level gauge IC 1162 derives the remaining battery charge Cbat based on the power supply voltage Vbat and the battery temperature Tbat, and so on. The power supply voltage Vbat can, for example, be obtained by measuring the potential difference between the positive terminal connection 20a and the negative terminal connection 20b, such as by a voltage sensor. The battery temperature Tbat can for example be obtained by measuring the voltage drop by the battery temperature sensor 1115, in other words, the potential difference between the temperature connection 20c and the negative terminal connection 20b, using a voltage sensor or the like.

As an example, the battery level gauge IC 1162 derives the remaining battery charge Cbat corresponding to the combination of the present power supply voltage Vbat and the battery temperature Tbat using a table or calculation defining the relationship between the combination of the power supply voltage Vbat and the battery temperature Tbat and the remaining battery charge Cbat. In this way, by deriving the remaining battery charge Cbat taking into account not only the power supply voltage Vbat but also the battery temperature Tbat, it is possible to derive the remaining battery charge Cbat with better accuracy than when deriving the remaining battery charge Cbat only from the power supply voltage Vbat. Furthermore, the battery level gauge IC 1162 may be configured to derive the remaining battery charge Cbat using also the cycle count value and/or SOH described below. In this way, it is possible to derive the remaining battery charge Cbat.

When the battery level gauge IC 1162 derives the remaining battery charge Cbat, it outputs information indicating the remaining battery charge Cbat to the MCU 1161. This enables the MCU 1161 to obtain the present battery charge Cbat. Hereinafter, the information indicating the remaining battery level Cbat is also referred to as "remaining battery level information".

The battery level gauge IC 1162 may also output information indicating the power source voltage Vbat and the battery temperature Tbat to the MCU 1161. This enables the MCU 1161 to obtain also the present power supply voltage Vbat and the battery temperature Tbat. Hereinafter, the information indicating the power supply voltage Vbat is also referred to as "power supply voltage information" and the information indicating the battery temperature Tbat is also referred to as "battery temperature information".

Also, in this embodiment, the battery level gauge IC 1162 counts the cycle count of the power source unit 111 based on the remaining battery charge Cbat and stores the count value. Here, the cycle count is, for example, the number of times the SOC (State of charge) of the power source unit 111 (more specifically the battery 1111) has been charged to a total of 100[%] or the number of times the SOC has been discharged to a total of 100[%], counted as one cycle, also referred to as a "full charging cycle". The count value of the cycle count by the battery level gauge IC 1162 (also referred to hereinafter as the "cycle count value") is stored, for example, in a non-volatile memory provided by the battery level gauge IC 1162 (for example, a memory 1162a described below). Note that this non-volatile memory may be provided outside of the battery level indicator IC 1162, in a manner that enables the battery level indicator IC 1162 to access it.

Furthermore, in this embodiment, the battery level gauge IC 1162 derives the SOH (State of Health), which is the health of the power source unit 111, based on the power source voltage Vbat and the cycle count value, and stores the derived SOH. The SOH derived by the battery level gauge IC 1162 is also stored, for example, in the non-volatile memory provided in the battery level gauge IC 1162, similar to the cycle count value. The MCU 1161 can also refer to this non-volatile memory as appropriate, for example, to obtain stored cycle count values or information indicative of SOH. Hereinafter, information indicative of cycle count values is also referred to as "cycle count information" and information indicative of SOH is also referred to as "SOH information".

### 5. Example of Control by the MCU

As previously described, in the inhalation device 100, the power source unit 111 can be inserted into and removed from the power supply unit 110, to enable a user to replace the power source unit 111. Therefore, if, for example, repeated charging and discharging causes the performance of the power source unit 111 to deteriorate and degrade, the user may replace it with a new power source unit 111, thereby enabling the inhalation device 100 to be fully used.

On the other hand, if a user can replace the power source unit 111, an appropriate power source unit 111 may not necessarily be properly fitted. It is also conceivable that there could be a problem with the power source unit 111 after replacement, for example the power source unit 111 after replacement (in other words, the newly installed power source unit 111) is not compatible with the power supply unit 110 in terms of hardware or software. It is also conceivable that the power source unit 111 after replacement is not properly mounted on the power supply unit 110, such as a user error causing the power source unit 111 after replacement to be connected reversed to the connection portion 20x, or foreign matter such as dust adhering to the connection portion 20x during the operation of replacing the power source unit 111.

Therefore, if there is a problem with the power source unit 111 after replacement, or if the power source unit 111 after replacement is not properly installed in the power supply unit 110, and the power supply unit 110 is operated normally without considering this problem, it may lead to a failure of the power supply unit 110, and this is undesirable from the perspective of ensuring the safety of the power supply unit 110 and/or user convenience.

Therefore, the MCU 1161 (in other words, the control unit 116) performs a predetermined operation check when the power source unit 111 connected to the connection portion 20x is replaced, and operation of the power supply unit 110 is controlled based on the result of the operation check.

In the operation check, the MCU 1161 obtains, for example, information about the power source unit 111 after replacement (also referred hereinafter as "connected power source information"). The MCU 1161 then detects, based on the acquired connected power source information, faults with the power source unit 111 after replacement and/or faults with the connection portion 20x connected to the power source unit 111 after replacement.

Although described in detail later, the connected power source information may include, for example, remaining battery charge Cbat, power supply voltage Vbat, SOH, battery temperature Tbat, power source ID, and so on, for the power source unit 111 after replacement Furthermore, the MCU 1161 can detect such faults by determining, for example, whether the remaining battery charge Cbat, the power source voltage Vbat, the SOH, the battery temperature Tbat, or power source ID meet predetermined conditions, based on such connected power supply information. Details regarding connected power source information and operation check are described later, so they are not explained here.

Performing such an operation check when the power source unit 111 has been replaced and controlling the power supply unit 110 based on the results allows the power supply unit 110 to be prevented from operating normally when there is a fault with the power source unit 111 or connection portion 20x. Therefore, better safety of the inhalation device 110 and better user convenience can be achieved.

The MCU 1161 can detect, for example, that the power source unit 111 connected to the connection portion 20x has been replaced, based on the occurrence of a potential difference between the positive terminal connection 20a and the negative terminal connection 20b, in other words, a transition of the potential difference between the positive terminal connection 20a and the negative terminal connection 20b from 0 [V] to a state greater than 0 [V]. The potential difference between the positive terminal connection 20a and the negative terminal connection 20b can be obtained by measurement, for example by a voltage sensor. As another example, the MCU 1161 may detect that the power source unit 111 connected to the connection portion 20x has been replaced based on a change in the power source ID of the power source unit 111 connected to the connection portion 20x.

The MCU 1161 performs the operation check, for example in response to the power source unit 111 connected to the connection portion 20x being replaced. This allows the operation check to be performed automatically triggered by the replacement of the power source unit 111. Therefore, it is possible to reduce the user's time and effort required to perform the operation check compared with the case where operations other than the replacement of the power source unit 111 are required to perform the operation check.

As another example, the MCU 1161 may be configured to perform the operation check in response to a predetermined operation by the user after the power source unit 111 connected to the connection portion 20x has been replaced. In this way, the operation check can be carried out waiting for the predetermined operation to be performed by the user.

For example, a user who is unfamiliar with replacing the power source unit 111 may not be able to determine whether the power source unit 111 has been properly mounted and may repeatedly remove and install the power source unit 111 during its replacement. For this reason, if the operation check is performed automatically in response to the power source unit 111 being connected to the connection portion 20x, the operation check may also be performed repeatedly when the power source unit 111 is repeatedly attached and detached as described above, leading to an increase in power consumption.

In contrast, if the system is configured to perform an operation check triggered by a predetermined operation performed by the user after the power source unit 111 connected to the connection unit 20x has been replaced, it is possible to perform the operation check only after it is assumed that the user has completed replacing the power supply unit 111. This makes it possible to prevent an increase in power consumption increase due to repeated operation checks even if the user repeatedly attaches and detaches the power source unit 111 when replacing the power source unit 111.

In this case, it is preferable that the predetermined operation is an operation that can be performed when the user determines that the replacement of the power source unit 111 is complete, in other words, an operation that can be assumed to indicate that the replacement of the power source unit 111 is complete. For example, the predetermined operation can be the pressing of an operation button (for example, an operation button on the operation portion 15) provided on the inhalation device 100. As another example, the predetermined operation may be mounting the panel 30, which is a cover member covering the power supply accommodating portion 200 in which the power source unit 111 is accommodated, on the power supply unit 110. As yet another example, the predetermined operation may be the input of information to the power supply unit 110 that replacement of the power source unit 111 has been completed via another device (for example a terminal device such as a user's smartphone) capable of communicating with the power supply unit 110. Also, the predetermined operation may be a combination of a plurality of operations, for example a combination such as mounting the panel 30 and pressing the operation button. For example, the MCU 1161 can detect that the predetermined operation has occurred based on information acquired by the sensor unit 112 or the communication unit 115.

The MCU 1161 prevents operation of at least part of the operation of the power supply unit 110 based on, for example, the result of the operation check. Specifically, the MCU 1161 prevents operation of at least a part of the power supply unit 110 if a fault is detected by the operation check. As a result, it is possible to prevent the inconvenience of the power supply unit 110 operating normally with all its functions enabled, even if there is some fault related to the power source unit 111 or the connection unit 20x after the power source unit 111 has been replaced.

On the other hand, if the MCU 1161 does not detect a fault in the operation check, it does not prevent the above parts of the operation, and operates the power supply unit 110 as normal. This enables the power supply unit 110 to operate normally if there is no fault with the power source unit 111 or the connection portion 20x after the replacement of the power source unit 111, in other words, if the replacement of the power source unit 111 was appropriate. In this case, the MCU 1161 may also notify the user, for example via the notification unit 113, that the replacement of the power source unit 111 has been successfully completed and/or that the power supply unit 110 (in other words, the inhalation device 100) is ready for use.

Some operations that are subject to prohibition based on the result of the operation check include, for example, powering the heating unit 121 from the power source unit 111, in other words, generating an aerosol by the heating unit 121. This makes it possible to prevent problems such as power being supplied to the heating unit 121, which handles a large amount of power, even if there is some fault in the power source unit 111 or the connection portion 20x after the power source unit 111 has been replaced.

Also, one of the operations that is subject to being prohibited based on the result of the operation check includes, for example, charging of the power source unit 111. This enables prevention of inconveniences such as power being supplied to the power source unit 111 even if there is some fault in the power source unit 111 or the connection portion 20x after the power source unit 111 has been replaced.

The MCU 1161 may also prevent the power supply unit 110 from transitioning from a sleep mode to an active mode when a fault is detected by the operation check. Here, the sleep mode can be, for example, a mode in which only the minimum components necessary to control the operation of the power supply unit 110 are supplied with power (in other words, a low power consumption mode). On the other hand, the active mode can be, for example, a mode in which other components (for example, the heating unit 121) may be supplied with power in addition to the minimal components necessary to control the operation of the power supply unit 110.

Also, if the MCU 1161 detects a fault by the operation check, it may, for example, notify the user via the notification unit 113 of the detected fault and/or recommendations corresponding to the detected fault. Here, the recommendations indicate, for example, the operations to be performed by the user to rectify the fault detected in the operation check. In this way, notifying the user of the detected fault and/or providing recommendations depending on the detected fault can prompt the user to take appropriate action to rectify the fault.

For example, if the notification unit 113 includes a light-emitting device, the notification may be implemented by causing the light-emitting device to emit light in a predetermined light-emitting pattern. The light-emitting pattern here refers to, for example, the color of light emission, the number of emissions of light (for example, the number of light-emitting elements being caused to emit light), or a light emission pattern (for example, flashing). If the notification unit 113 includes a vibrating device, the above notification may be made by vibrating the vibrating device in a predetermined vibration mode. Here, the vibration mode refers to, for example, the vibration pattern (for example, the way the vibration occurs), the vibration intensity, the vibration frequency, or the duration of the vibration. If the notification unit 113 includes a display device, the above notification may be made by causing this display device to display a predetermined image (for example, a so-called "icon") or a predetermined message (in other words, a character string).

Furthermore, the MCU 1161 may, for example, transmit the information indicating the detected fault and/or recommendations corresponding to the detected fault to another device (for example, a terminal device such as a user's smartphone) that can communicate with the power supply unit 110 via the communication unit 115, and cause the other device to make the above notification. Specific examples of notifications performed based on the results of the operation check will be described later.

### Example of Connected Power Source Information Obtained by the MCU

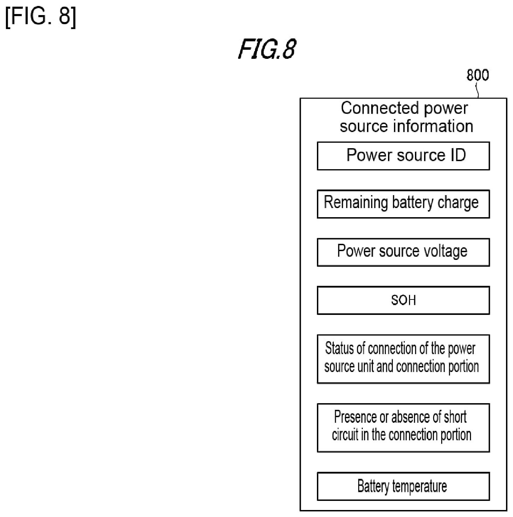

Fig. 8 is a diagram showing an example of connected power source information acquired by the control unit 116. As shown in Fig. 8, the MCU 1161 acquires connected power source information 800, which includes information such as power source ID, remaining battery charge Cbat, power source voltage Vbat, the SOH, the connection status between the power source unit 111 and the connection portion 20x, the presence or absence of a short circuit in the connection portion 20x, and battery temperature Tbat.

As previously described, the power source ID information, which is information indicative of the power source ID, can for example be obtained from the memory 1116 of the power source unit 111. In addition, the remaining battery level information indicated by the remaining battery charge Cbat, the power supply voltage information, indicated by the power supply voltage Vbat, the SOH information indicated by the SOH, and the battery temperature information indicated by the battery temperature Tbat can be obtained from the battery level gauge IC 1162.

Also, connection status information, which is information indicating the connection status of the power source unit 111 and the connection portion 20x, can be information indicating whether or not the connection status between the power source unit 111 and the connection portion 20x is normal. For example, when obtaining the connected power source information 800, if the potential difference between the positive terminal connection 20a and the negative terminal connection 20b is within a predetermined range greater than 0 [V] and the potential of the positive terminal connection 20a is higher than the potential of the negative terminal connection 20b, the MCU 1161 may obtain connection status information indicating that the connection state between the power source unit 111 and the connection portion 20x is normal. On the other hand, if the potential difference between the positive terminal connection 20a and the negative terminal connection 20b is outside the predetermined range, or the potential of the positive terminal connection 20a is lower than the potential of the negative terminal connection 20b, the MCU 1161 may obtain connection status information indicating that the connection status between the power source unit 111 and the connection portion 20x is not normal. Short circuit information, which is information indicating the presence or absence of a short circuit at the connection portion 20x, can also be obtained in the same way, for example based on the potential difference between the positive terminal connection 20a and the negative terminal connection 20b.

Note that the method of obtaining each item of information included in the connected power source information 800 described herein is only an example, and is not limited to this. In other words, any known method may be used to obtain each item of information included in the connected power source information 800. Note that the connected power source information 800 described here is just an example, and is not limited to this. In other words, the connected power source information acquired by the MCU 1161 may be omitted from the connected power source information 800, or may be further added to the connected power source information 800.

### Examples of Operation Checks

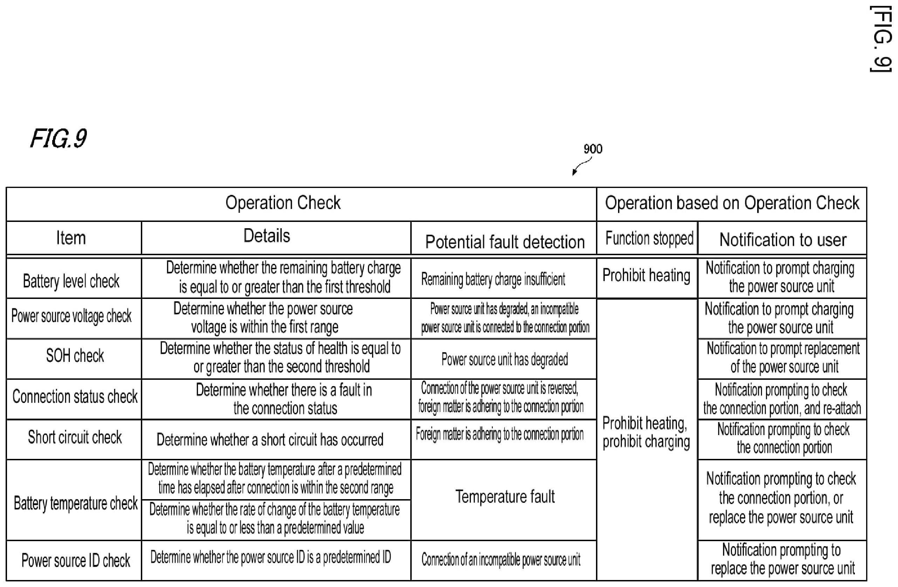

Fig. 9 shows examples of operation checks executed by the MCU 1161. As shown in Table 900 in Fig. 9, in the operation checks, the MCU 1161 performs, for example, a remaining battery level check, a power supply voltage check, an SOH check, a connection status check, a short circuit check, a battery temperature check, and a power source ID check.

Here, the remaining battery level check is a process of checking whether a certain amount of power remains in the power source unit 111 after replacement. Specifically, in the remaining battery level check, the MCU 1161 determines whether the remaining battery charge Cbat is greater than or equal to a predetermined first threshold based on the remaining battery level information in the connected power source information 800. The MCU 1161 then detects faults, such as insufficient remaining battery charge Cbat in the power source unit 111 after replacement, based on determining that the remaining battery charge Cbat is not greater than or equal to the first threshold (in other words, is less than the first threshold).

By performing the operation checks including such a remaining battery level check and controlling the operation of the power supply unit 110 based on the result, it is possible to prevent the inconvenience of operating the power supply unit 110 as normal and depleting the power of the power source unit 111 even though the remaining battery charge Cbat of the power source unit 111 after replacement is insufficient.

Note that the first threshold used for the remaining battery level check can be defined as appropriate by the manufacturer of the power supply unit 110, but preferably it is based on the power required for the generation of aerosol by the heating unit 121, which is the main operation of the power supply unit 110 (in other words, the inhalation device 100). In this way, it is possible to prevent a situation in which the generation of aerosol performed, for example, after replacement of the power source unit 111 is interrupted prematurely due to insufficient remaining battery charge Cbat in the power source unit 111 after replacement.

More specifically, the power supply unit 110 generates the aerosol by heating the aerosol source by the heating unit 121 based on a predetermined heating profile, for example. Here, the heating profile is information defining a time-series transition of the temperature of the heating unit 121. Then, when generating an aerosol based on the heating profile, the MCU 1161 controls the temperature of the heating unit 121 based on the difference between the target temperature corresponding to the elapsed time since heating by the heating unit 121 started and the actual temperature of the heating unit 121 (hereinafter also referred to as "actual temperature"). At this time, the MCU 1161 controls the temperature of the heating unit 121 so that the time series transition of the actual temperature is similar to the time series transition of the target temperature defined in the heating profile. For example, a value capable of ensuring that there is power capable of completing the generation of aerosol based on such a heating profile is adopted as the first threshold value,

Also, here the power supply voltage check is the process of checking whether the power source voltage Vbat, which is the output voltage of the power source unit 111 after replacement, is within an appropriate range for the power supply unit 110. Specifically, in the power supply voltage check, the MCU 1161 determines whether the power source voltage Vbat is within a predetermined first range, based on the power supply voltage information in the connected power source information 800. Then, based on its determination that the power source voltage Vbat is not within the first range (in other words, is outside the first range), the MCU 1161 detects a fault such as deterioration of the power source unit 111 after replacement or connection of an unsuitable power source unit 111 (in other words, the power source unit 111 after replacement is not compatible with the power supply unit 110).

For example, if the power source unit 111 after replacement is already degraded, its power source voltage Vbat is lower than the lower limit value of the first range. Also, if the power source unit 111 after replacement is not compatible with the power supply unit 110, its power source voltage Vbat may be higher than the upper limit value of the first range or lower than the lower limit value of the first range. Therefore, determining whether the power source voltage Vbat of the power source unit 111 after replacement is within the first range enables faults to be detected, such as degradation of the power source unit 111 after replacement or connection of an incompatible power source unit 111. Note that the first range used for the power source voltage check is pre-set by the manufacturer of the power supply unit 110, for example, taking into account the power source unit 111 mounted in the power supply unit 110, or the hardware or software characteristics of the power supply unit 110 itself.

By performing the operation check including such a power supply voltage check and controlling the operation of the power supply unit 110 based on the result, it is possible to prevent the inconvenience of operating the power supply unit 110 as normal even though the power source unit 111 after replacement is not compatible with the power supply unit 110.

Here, the SOH check is the process of checking whether the power source unit 111 after replacement is healthy (in other words, that there is little degradation). Specifically, in the SOH check, the MCU 1161 determines whether the SOH is greater than or equal to a second threshold based on the SOH information in the connected power source information 800. The MCU 1161 then detects a fault, such as degradation of the power source unit 111 after replacement, based on determining that the SOH is not greater than or equal to the second threshold (in other words, is less than the second threshold).

For example, the SOH represents the level of soundness of the power source unit 111 within a range of 100 [%] to 0 [%], and the larger the value the healthier the the power source unit 111 (in other words the less it is degraded). The second threshold value to be used for the SOH check may be defined by the manufacturer of the power supply unit 110 as appropriate. However, preferably it is determined taking into consideration the hardware characteristics, or the like, of the power source unit 111 that can be mounted on the power supply unit 110 or the power supply unit 110 itself. An example of the second threshold used for the SOH check can be 70 [%], at which the power source unit 111 is considered to be in a somewhat healthy state.

By performing the operation check including such an SOH check and controlling the operation of the power supply unit 110 based on the result, it is possible to prevent the inconvenience of operating the power supply unit 110 as normal even though the power source unit 111 after replacement is already degraded (in other words, the performance is degraded).

Also, here the connection status check is a process of checking whether the connection status between the power source unit 111 and the connection portion 20x is normal. Specifically, in the connection status check, the MCU 1161 determines whether the connection status between the power source unit 111 and the connection portion 20x is normal or not, based on the connection status information in the connected power source information 800. The MCU 1161 then detects a fault such as reverse connection of the power source unit 111 or adhesion of foreign matter such as dust to the connection portion 20x based on determining that the connection state between the power source unit 111 and the connection portion 20x is not normal. Reverse connection of the power source unit 111 is, for example, a state in which the negative electrode terminal 111d of the power source unit 111 is connected to the positive terminal connection 20a of the power supply unit 110, and the positive electrode terminal 111c of the power source unit 111 is connected to the negative terminal connection 20b of the power supply unit 110 respectively.

By performing an operation check comprising such a connection status check and controlling the operation of the power supply unit 110 based on the result, it is possible to prevent the occurrence of inconveniences such as operating the power supply unit 110 as normal even though the power source unit 111 is not properly connected.

Also, here the short-circuit check is a process of checking if a short circuit has occurred in the connection portion 20x connected to the power source unit 111 after replacement. Specifically, in the short-circuit check, the MCU 1161 determines whether a short circuit has occurred at the connection portion 20x based on the short-circuit information in the connected power source information 800. The MCU 1161 then detects that the fault has occurred, namely the short circuit at the connection portion 20x, based on its determination that a short circuit has occurred. Note that a short circuit in the connection portion 20x may, for example, occur due to a foreign body such as dust adhering to the connection portion 20x.

By performing the operation check including such a short-circuit check and controlling the operation of the power supply unit 110 based on the result, it is possible to prevent the inconvenience of operating the power supply unit 110 as normal despite a short circuit occurring in the connection portion 20x connected to the power source unit 111 after replacement.

Also, here the battery temperature check is a process of checking whether the temperature state of the power source unit 111 after replacement is normal. In the present embodiment, in the battery temperature check, the MCU 1161 checks if the battery temperature Tbat of the power source unit 111 after replacement is normal, and checks if the rate of temperature increase of the power source unit 111 after replacement is normal. Here, the rate of increase in temperature of the power source unit 111 is the amount of increase in temperature of the power source unit 111 per unit time.

Specifically, in checking the battery temperature Tbat, the MCU 1161 determines whether the battery temperature Tbat is within a predetermined second range based on the battery temperature information in the connected power source information 800. The MCU 1161 then detects a fault, namely an abnormal temperature of the power source unit 111 after replacement, based on its determination that the battery temperature Tbat is not within the second range (in other words, is outside the second range).

Note that an abnormal temperature, such as the battery temperature Tbat being out of the second range, may occur, for example, if the power source unit 111 after replacement is not compatible with the power supply unit 110, or if foreign matter, such as dust, is sandwiched between the temperature connection 20c of the power supply unit 110 and the temperature terminal 111e of the power source unit 111. The second range used for checking the battery temperature Tbat is also pre-set by the manufacturer of the power supply unit 110, for example taking into account the hardware characteristics of the power source unit 111 that can be mounted on the power supply unit 110 or the power supply unit 110 itself. An example of the second range used for checking the battery temperature Tbat can be the range from 0 [°C] to 60 [°C].

It is possible that it will take some time for the battery temperature Tbat to increase to a certain level even if, for example, the power source unit 111 after replacement is not compatible with the power supply unit 110.

Therefore, when checking the battery temperature Tbat, the MCU 1161 may, for example, acquire battery temperature information indicating the battery temperature Tbat during a predetermined period after the replacement of the power source unit 111, and determine whether the battery temperature Tbat during that predetermined period is within the second range. More specifically, the MCU 1161 may determine if the battery temperature Tbat in the period from when replacement of the power source unit 111 is detected until 5 [s] has elapsed is within the second range. In this way, it is possible to detect with greater accuracy a fault such as an abnormal temperature of the power source unit 111 after replacement, in other words, a fault such as an incompatible power source unit 111 connection, or a faulty connection of the connection portion 20x.

Also, when checking the rate of increase in temperature, the MCU 1161 determines whether the rate of increase in temperature of the power source unit 111 in a predetermined period of time after replacement of the power source unit 111 is less than or equal to a third threshold based on the battery temperature information in the connected power source information 800. Then, based on its determination that the rate of temperature rise of the power source unit 111 is not below the third threshold (in other words, is greater than the third threshold), the MCU 1161 detects the fault that there is an abnormal temperature in the power source unit 111 after replacement.

An abnormal temperature, such as the rate of increase in the temperature of the power source unit 111 being greater than the third threshold, may also occur, for example, if the power source unit 111 after replacement is not compatible with the power supply unit 110. Also, the third threshold used for checking the rate of increase in temperature is preset by the manufacturer of the power supply unit 110, for example, taking into account the characteristics of the power source unit 111 mounted in the power supply unit 110 or the power supply unit 110.

By performing the operation check including the battery temperature check as described above, and controlling the operation of the power supply unit 110 based on the results. it is possible to prevent the occurrence of inconveniences such as operating the power supply unit 110 as normal even though the power source unit 111 after replacement is not compatible with the power supply unit 110, or the power source unit 111 is not properly connected.

Also, here the power source ID check is the process of checking whether the power source unit 111 after replacement is compatible with the power supply unit 110 based on the power supply ID of the power source unit 111 after replacement. Specifically, in the power source ID check, the MCU 1161 determines whether the power source ID of the power source unit 111 after replacement is a predetermined ID based on the power source ID information in the connected power source information 800. The MCU 1161 then detects a fault, such as connection of an incompatible power source unit 111, based on determining that the power source ID of the power source unit 111 after replacement is not the predetermined ID.

As an example, the so-called "genuine" power source unit 111 provided to the user by the manufacturer of the power supply unit 110 is affixed with a power source ID comprising a predetermined character string. In this case, in the power source ID check, the MCU 1161 determines whether the power source ID of the power source unit 111 after replacement includes the predetermined string. Then, when the MCU 1161 determines that the above predetermined string is not included, it determines that the power source ID of the power source unit 111 after replacement is not the predetermined ID. This enables a fault such as the connection of an incompatible power source unit 111 to be detected when there is replacement with a power source unit 111 manufactured by a third party other than the manufacturer of the power supply unit 110, in other words a non-genuine power source unit 111 which has not been verified as safe by the manufacturer of the power supply unit 110.

Also, during the power source ID check, the MCU 1161 may, for example, transmit power source ID information to a server device managed by the manufacturer of the power supply unit 110 (for example, a server device SV described later) via the communication unit 115. In this case, the server device that has received the power source ID information performs authentication of whether the power source ID of the power source unit 111 after replacement is the predetermined ID, and returns the authentication result to the power supply unit 110. The MCU 1161 may then determine whether the power source ID of the power source unit 111 after replacement is the predetermined ID based on the authentication result received from the server device.

Also, as shown in Table 900, if any fault is detected by the operation checks described above, the MCU 116, for example, prohibits heating by the heating unit 121 (in other words, the supply of power to the heating unit 121). In other words, in this case, the MCU 1161 ensures that heating by the heating unit 121 is not performed even if there is a heating request from the user. This enables the occurrence of inconveniences such as heating by the heating unit 121 after replacement of the power source unit 111 to be prevented, even when there is a fault with the power source unit 111 or the connection portion 20x.

Furthermore, if the fault detected by the operation check is a fault other than insufficient remaining battery charge Cbat, the MCU 1161 also stops charging of the power source unit 111, for example. In other words, in this case, the MCU 1161 prevents charging of the power source unit 111, even if there is a charging request from the user (for example, the power supply unit 110 is connected to an external power source). This enables the occurrence of disadvantages such as charging of the power source unit 111 after replacement of the power source unit 111 to be prevented, even though there is a fault with the power source unit 111 or the connection portion 20x.

Also, as shown in Table 900, if an operation check detects any fault, the MCU 1161 may notify the user of recommendations in accordance with the detected fault, via the notification unit 113.

Specifically, if a fault is detected in the remaining battery level, such as insufficient remaining battery charge Cbat, the MCU 1161 provides, for example, a notification prompting the charging of the power supply unit 111 as a recommendation. If a fault is detected in the power supply voltage check, such as deterioration of the power source unit 111 or connection of an incompatible power source unit 111, the MCU 1161 provides a notification to replace the power source unit 111 as a recommendation, for example. If a fault is detected in the SOH check, such as a degradation of the power source unit 111, the MCU 1161 issues a notification to replace the power source unit 111, as a recommendation, for example.

In addition, if a fault is detected in the connection status check, such as a reverse connection of the power source unit 111 or foreign matter adhering to the connection portion 20x, the MCU 1161 provides a notification to check the connection 20x and reseat the power source unit 111, as a recommendation, for example. If a fault such as foreign matter adhering to the connection 20x is detected in the short-circuit check, the MCU 1161 provides a notification to check the connection 20x, as a recommendation, for example.

In addition, if a fault is detected in the battery temperature check, such as connection of an incompatible power source unit 111 or foreign matter adhering to the connection portion 20x, the MCU 1161 provides a notification to check the connection 20x and to replace the power source unit 111, as a recommendation, for example. If a fault is detected by the power source ID check, such as a connection of an incompatible power source unit 111, the MCU 1161 provides a notification to replace the power source unit 111, as a recommendation, for example.

It is also conceivable that multiple faults are detected by the operation check. In such a case, the MCU 1161 can, for example, notify recommendations in accordance with each detected fault.

Also, if no fault is detected by the operation check, the MCU 1161 does not prevent heating by the heating unit 121 or charging of the power source unit 111, for example. Therefore, in this case, the MCU 1161 causes heating by the heating unit 121 to take place in response to a heating request from the user, or charging the power source unit 111 in response to the power supply unit 110 being connected to an external power source.

Note that the operation checks described here and the operations of the power supply unit 110 based on the result of the operation checks are only examples, and are not limited to these. For example, any of the aforementioned operation checks performed by the MCU 1161 may be omitted, or further checks may be added. Also, the operation of the power supply unit 110 based on the results of the operational check may be replaced with other operations, and other operations may be included in addition to those described here.

Also, the timing at which the MCU 1161 performs an operation check can be when there is a first predetermined operation (for example, a heating or charging request) by the user after the replacement of the power source unit 111, for example, but the timing is not limited to this. For example, the MCU 1161 may perform an operation check after replacement of the power source unit 111 when there is a predetermined operation until the predetermined operation has been performed a predetermined number of times (for example, five times). In this way, after replacement of the power source unit 111, the safety of the power supply unit 110 can be further improved by performing multiple operational checks at different times.

### Resetting the Cycle Count value and SOH

In this embodiment, the battery level gauge IC 1162 counts the cycle count of the power source unit 111 and stores cycle count information indicating the count value (cycle count value). Furthermore, the battery level gauge IC 1162 also stores SOH information indicating the SOH of the power source unit 111. This information stored by the battery level gauge IC 1162 may, for example, be used to derive the remaining battery charge Cbat. It is also conceivable that the MCU 1161 will refer to this information stored by the battery level gauge IC 1162 as appropriate to control the operation of the power supply unit 110 based on the cycle count value and/or SOH.

As an example, it is conceivable that the MCU 1161 determines the lifetime of the power source unit 111 based on the cycle count value. In this case, the MCU 1161 determines that the power source unit 111 has expired, for example, based on the cycle count value reaching a predetermined value (for example, 1000 times). Then, having determined that the power source unit 111 has reached its end of life, the MCU 1161 notifies the user to replace the power source unit 111 via the notification unit 113, for example.

As another example, it is conceivable that the MCU 1161 controls heating by the heating unit 121 based on the SOH. In this case, for example, when heating by the heating unit 121 is not prevented (in other words, when no fault has been detected by the operation check), if there is a heating request from the user, the MCU 1161 determines whether the remaining battery charge Cbat at that time is greater than or equal to a predetermined heating authorization threshold. The MCU 1161 then allows heating by the heating unit 121 based on determining that the remaining battery charge Cbat is greater than or equal to the heating authorization threshold. This allows heating by the heating unit 121 to be performed only if the remaining battery charge Cbat is greater than or equal to the heating authorization threshold, in other words only if there is sufficient remaining battery charge Cbat to perform heating by the heating unit 121.

The heating authorization threshold is, for example, designed to take a higher value as the SOH gets worse (for example, closer to 0 [%]). This is because the worse the SOH, the lower the power source voltage Vbat, so if the output current from the power source unit 111 is not increased, the power supplied to the heating unit 121 (in other words the power required to generate aerosol) will not be available.

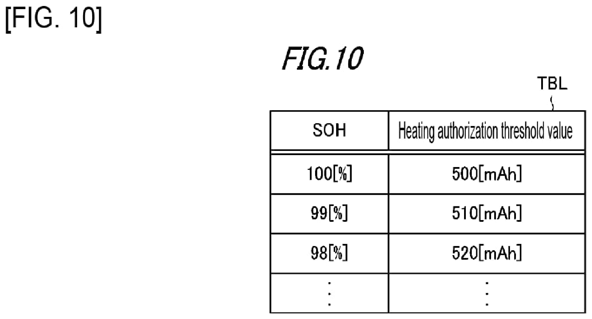

Fig. 10 is a diagram showing an example of a heating authorization threshold table TBL defining the heating authorization threshold values. In the heating authorization threshold table TBL shown in Fig. 10, the heating authorization threshold value is defined for each SOH. Specifically, in the heating authorization threshold table TBL,the worse the SOH, the higher the heating authorization threshold corresponding to that SOH, such as the heating authorization threshold value is 500 [mAh] when SOH is 100 [%], the heating authorization threshold value is 510 [mAh] when SOH is 99 [%], and the heating authorization threshold value is 520 [mAh] when SOH is 98 [%].

For example, if there is a heating request from the user when heating using the heating unit 121 is not prevented, the MCU 1161 refers to the heating authorization threshold table TBL stored in the battery level gauge IC 1162 and the SOH stored in the memory unit 114, and obtain the heating authorization threshold according to the current SOH (for example, 520 mAh if SOH is 98 [%]).

The MCU 1161 then compares the acquired heating authorization threshold with the current remaining battery charge Cbat to determine whether the remaining battery charge Cbat is greater than or equal to the heating authorization threshold, and the MCU 1161 determines that if the remaining battery charge Cbat is greater than or equal to the heating authorization threshold, heating is performed by the heating unit 121. On the other hand, the MCU 1161 prevents heating by the heating unit 121 if it determines that the remaining battery charge Cbat is not greater than or equal to the heating authorization threshold (in other words, less than the heating authorization threshold). This allows heating by the heating unit 121 to be performed only when there is sufficient battery charge Cbat to perform aerosol generation.

In this way, the MCU 1161 and/or the battery level gauge IC 1162 may carry out processing relating to the control of the power supply unit 110 with reference to the cycle count value and/or SOH, allowing the power supply unit 110 to perform an operation taking into account that cycle count value and/or SOH, thereby improving user convenience.

However, if such an arrangement is employed, there is a possibility that the power supply unit 110 may be controlled based on the cycle count value and/or SOH for the old power source unit 111 after replacement of the power source unit 111, unless the cycle count value and/or SOH are reset after replacement of the power source unit 111. If the power supply unit 110 is controlled based on a cycle count value and/or SOH for the old power source unit 111 after replacement of the power source unit 111, it may not be possible to,for example, derive the remaining battery charge Cbat, determine the lifespan of the power source unit 111, or obtain the heating authorization threshold, which may lead to a decrease in user convenience.

Thus, the MCU 1161 (i.e. the control unit 116) performs a reset process to reset the cycle count value and/or SOH stored by the battery level gauge IC 1162 to a predetermined value, for example when the power source unit 111 connected to the connection portion 20x is replaced. Performing such a reset process may prevent the power supply unit 110 from being controlled based on the cycle count value and/or SOH for the old power source unit 111 after replacement of the power source unit 111, thereby preventing reduced user convenience.

In this embodiment, the MCU 1161 resets both the cycle count value and the SOH stored by the battery level gauge IC 1162 to the predetermined values in the reset process as the battery level gauge IC 1162 stores each of the cycle count value and SOH. Resetting the cycle count values and SOH stored by the battery level gauge IC 1162 can be achieved, for example, by sending a reset request to the battery level gauge IC 1162 instructing these resets.

Also, in this embodiment, the MCU 1161 performs a reset process when the power source unit 111 is connected to the connection portion 20x and no fault is detected by the operation check described above. This allows the power supply unit 110 to continue to be controlled based on the cycle count value and SOH for the old power source unit 111 if the user switches back to the old power source unit 111 because a fault is detected by the operation check.

The MCU 1161 may also perform a reset process when no fault is detected by the operation check and there is a predetermined operation from the user. Here, the predetermined operation can, for example, be an operation instructing the execution of the reset process. One example can be pressing an operation button provided on the inhalation device 100 (for example, an operation button of the operation portion 15). As another example, this predetermined operation may be an operation of inputting information to the power supply unit 110 instructing execution of the reset process via another device such as a user's smartphone. In this way, by waiting for a predetermined operation from the user to perform the reset process, it is possible to prevent the reset process from being performed against the user's intention.

### Example of Reset Process

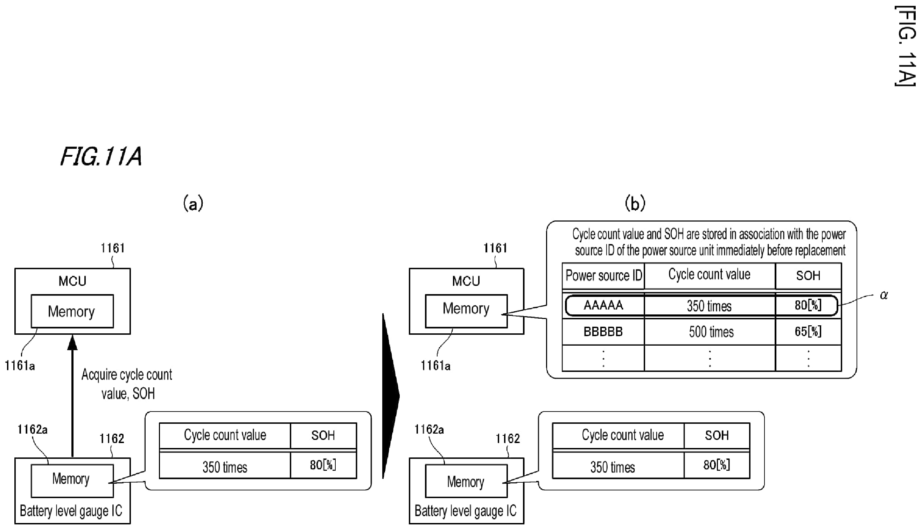

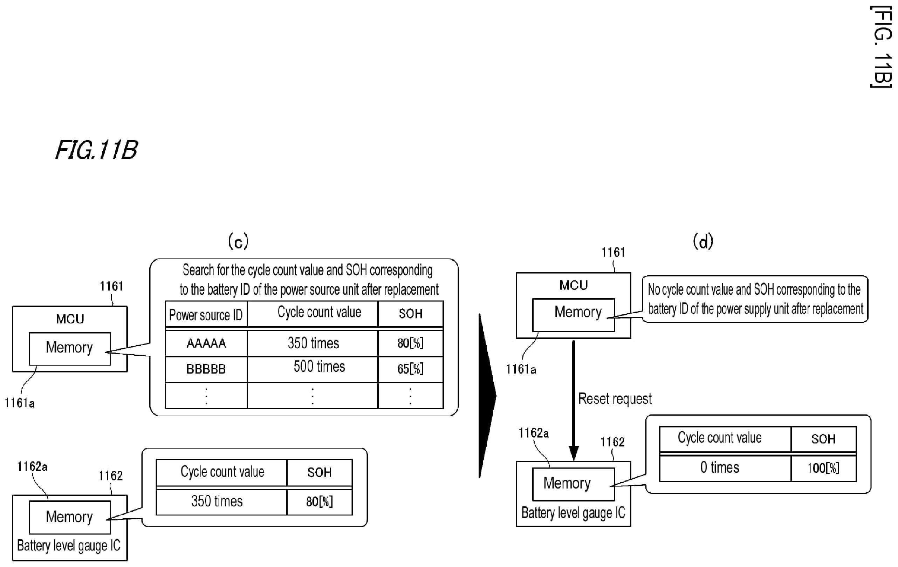

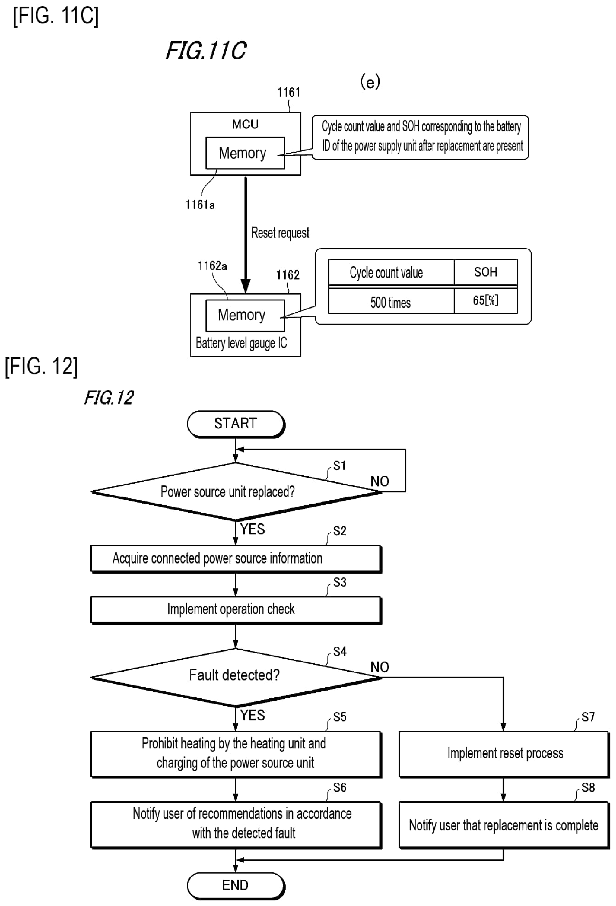

Here, an example of the reset process performed by the MCU 1161 is explained. Fig. 11A is a diagram (part 1) showing an example of a reset process implemented by the MCU 1161. Fig. 11B is a diagram (part 2) showing an example of a reset process implemented by the MCU 1161. Fig. 11C is a diagram (part 3) showing an example of a reset process implemented by the MCU 1161.

In the reset process, first, as shown in (a) in Fig. 11A, the MCU 1161 refers to the memory 1162a of the battery level gauge IC 1162 immediately before resetting, and obtains the cycle count value and SOH from the memory 1162a immediately before reset. In this way, in the example shown in Figure 11A (a), cycle count information indicating that the cycle count value is 350 cycles and SOH information indicating that the SOH is 80% are obtained.

Next, as shown in Figure 11A (b), the MCU 1161 stores the acquired cycle count information and SOH information, in other words, information indicating the cycle count value and SOH immediately before the reset, in a memory 1161a of the MCU 1161, which is different from the memory 1162a of the battery level gauge IC 1162, in association with the power source ID of the old power source unit 111 that was connected to the connection portion 20x immediately before the power supply unit 111 was replaced.

In the example shown in (b) in Fig. 11A, the power source ID of the old power source unit 111 connected to the connection portion 20x just before the power source unit 111 was replaced was "AAAAA", so the MCU 1161 associates and stores this power source ID "AAAAA" with the cycle count value "350 times" and SOH "80%" just before the reset in the memory 1161A (see the part outlined with a line with reference sign α).

Next, as shown in (c) in Figure 11B, the MCU 1161 searches for the cycle count value and SOH corresponding to the power source ID of the power source unit 111 after replacement from the memory 1161a, for example, based on the power source ID information in the connected power supply information 800. For example, if the power source ID of the power source unit 111 after replacement is "BBBBB", the MCU 1161 searches for the cycle count value and SOH corresponding to the power source ID "BBBBB" from the memory 1161a.

Assume that as a result of the above search, the cycle count value and SOH corresponding to the power source ID of the power source unit 111 after replacement are not retrieved from the memory 1161a. For example, if the power source unit 111 after replacement is installed in the power supply unit 110 for the first time, the cycle count value and SOH corresponding to the power source ID of the power source unit 111 after replacement will not be retrieved from the memory 1161a.

In such a case, the MCU 1161 resets the cycle count value and SOH stored in the memory 1162a of the battery level gauge IC 1162 to the predetermined initial value by sending a reset request to the battery level gauge IC 1162 to reset to the predetermined initial value, as shown in (d) in Figure 11B. In this way, in the example shown in (d) in Figure 11B, the cycle count value stored in the memory 1162a has been reset to the initial value of "0 times" and the SOH has been reset to the initial value of "100 [%]".

On the other hand, assume that the above search results in finding the cycle count value and SOH corresponding to the power source ID of the power source unit 111 after replacement. For example, when a power source unit 111 that has been previously installed in the power supply unit 110 is reinstalled in the power supply unit 110, in this way the cycle count value and SOH corresponding to the power source ID of the replaced power source unit 111 will be retrieved. As an example, in this case, it is assumed that the power source ID of the power source unit 111 after replacement was "BBBBB", so the cycle count value "500" and SOH "65 [%]" corresponding to the power source ID "BBBBB" were retrieved.

In such a case, as shown in (e) of Figure 11C, the MCU 1161 sends a reset request to the battery level gauge IC 1162 to reset the retrieved cycle count value and SOH, that is, the cycle count value and SOH corresponding to the power source ID of the power source unit 111 after replacement. In this way, the cycle count value stored is reset to "500 times" and the SOH to 65 [%] in the memory 1162a in the example shown in (e) in Figure 11C.

As described above, when resetting the cycle count value and SOH stored by the battery level gauge IC 1162 (and more specifically by the memory 1162a) to predetermined values, the MCU 1161 stores information indicative of the cycle count value and SOH immediately before resetting to that predetermined value in the memory 1161a of the MCU 1161. In this way, even if the cycle count value and SOH stored in the battery level gauge IC 1162 are reset, the cycle count value and SOH can be subsequently restored to the pre-reset cycle count value and SOH by referring to the memory 1161a if necessary.

Also, the MCU 1161 stores information indicating the cycle count value and SOH immediately before the reset in the memory 1161a, associating it with the power source ID of the old power source unit 111 that was connected to the connection portion 20x immediately before the power source unit 111 was replaced. In this way, the cycle count value and SOH corresponding to each power source unit 111 can be stored in the memory 1161a in a manner that they can be distinguished.

Then, when the power source unit 111 is replaced, the MCU 1161 obtains the power source ID of the power supply unit 111 after replacement, and searches the memory 1161a for the cycle count value and SOH corresponding to the power source ID of the power supply unit 111 after replacement. If the cycle count value and SOH corresponding to the power source ID of the power supply unit 111 after replacement are found, the MCU 1161 resets the cycle count value and SOH stored in the battery level gauge IC 1162 with the cycle count value and SOH as the predetermined values. In this way, if for example the old power source unit 111 is reinstalled in the power supply unit 110 due to a fault in the power source unit 111 after replacement, the cycle count value and SOH corresponding to the old power source unit 111 can be restored by referring to the memory 1161a. Therefore, it is possible to properly operate the power supply unit 110 based on a suitable cycle count value and/or SOH even after the old power source unit 111 is reinstalled.

On the other hand, if the MCU 1161 does not find the cycle count value and SOH corresponding to the power source ID of the power source unit 111 after replacement, it resets the cycle count value and SOH stored in the battery level gauge IC 1162 with predetermined initial values as the predetermined values. This enables the power supply unit 110 to operate properly based on appropriate cycle count values and/or SOH, for example even if the power source unit 111 after replacement is the first one mounted in the power supply unit 110.

### Example of Control Flow by the MCU

Fig. 12 is a flowchart showing an example of control flow by the MCU 1161. As shown in Fig. 12, the MCU 1161 first determines whether the power source unit 111 connected to the connection portion 20x has been replaced, in other words, determine whether the power source unit 111 mounted in the power supply unit 110 has been replaced (step S1). If it is determined that the power source unit 111 has not been replaced (step S1: NO), the MCU 1161 repeats the process of step S1 until it is determined that the power source unit 111 has been replaced.

When it has been determined that the power source unit 111 has been replaced (step S1:YES), the MCU 1161 obtains connected power source information (for example, connected power source information 800 shown in Fig. 8) for the power source unit 111 connected to the connection portion 20x (step S2). The MCU 1161 then performs an operation check based on the connected power source information obtained from the process in step S2 (step S3).

Next, the MCU 1161 determines whether or not a fault was detected by the operation check in step S3 (step S4). If a fault was detected (step S4: YES), the MCU 1161 prohibits heating by the heating unit 121 and charging of the power source unit 111 (step S5). The MCU 1161 then notifies the user (step S6) of a recommendation in accordance with the detected fault, via the notification unit 113 and ends the sequence of processes.

Also, if no fault is detected (step S4: NO), the MCU 1161 carries out a reset process (step S7). The MCU 1161 then notifies the user (step S8) that the replacement of the power source unit 111 has been completed via the notification unit 113, and ends the sequence of processes.

As described above, according to the power supply unit 110 of the present embodiment, when the power source unit 111, which is capable of storing power and is configured to be capable of being attached to or detached from the power supply unit 110, is replaced, it is possible to detect faults related to the power source unit 111 after replacement and/or faults related to the connection portion 20x of the power supply unit 110 connected to the power source unit 111 after replacement, and to perform operations based on the detection results. Therefore, it is possible to prevent the power supply unit 110 from operating normally after replacement of the power source unit 111, even though there is some fault with the power source unit 111 or the connection portion 20x. Therefore, better safety of the power supply unit 110 and/or better user convenience can be achieved.

Even if the power source unit 111 after replacement is not compatible with the power supply unit 110, it is conceivable that updating the firmware of the power supply unit 110 will make the power source unit 111 after replacement usable in the power supply unit 110.

Therefore, when the control unit 116 (for example the MCU 1161) determines from the operation check that the power source unit 111 after replacement is not compatible with the power supply unit 110, it transmits power source ID information indicating the power source ID of the power source unit 111 after replacement to an external device via the communication unit 115, and the firmware of the power supply unit 110 corresponding to the power source unit 111 after replacement may be obtained from the external device.

### Information Processing System that Updates the Firmware of the Power Supply 110

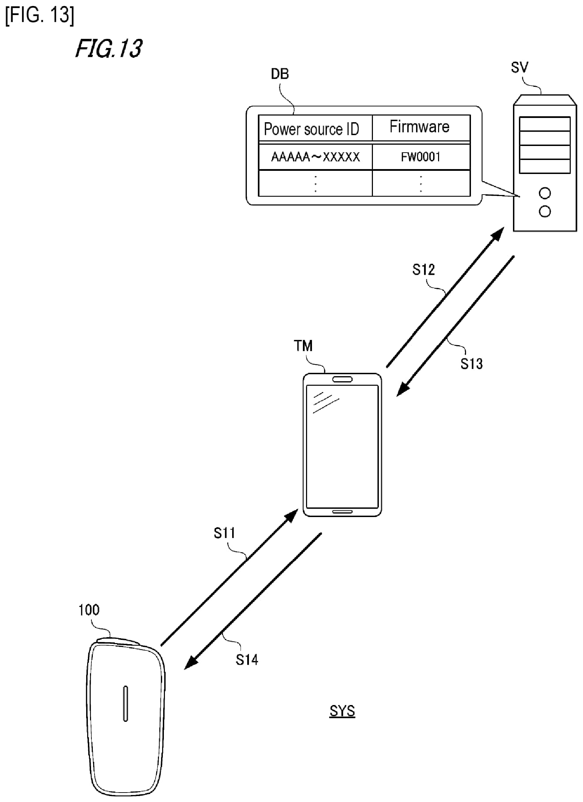

Fig. 13 is a diagram showing an example of an information processing system for updating the firmware of the power supply unit 110. An information processing system SYS as shown in Fig. 13 comprises the aforementioned inhalation device 100, a terminal device TM, and a server device SV.

In the information processing system SYS, the inhalation device 100 (more specifically, the power supply unit 110) and the terminal device TM are provided in a state where they can communicate with each other. For communication between the inhalation device 100 and the terminal device TM, for example, Wi-Fi, Bluetooth, BLE, NFC, or LPWA, and so on, may be used. Also, the inhalation device 100 and the terminal device TM may be connected by wire.

Also, in the information processing system SYS, the terminal device TM and the server device SV are configured to communicate with each other via a predetermined network, such as a mobile communication network, the Internet, or a Wide Area Network (WAN).

The terminal device TM is a computer used by a user of the inhalation device 100. A smartphone, a tablet terminal, a personal computer (PC), or wearable terminal (for example, a smart watch), or the like, may be used as the terminal device TM. Hereinafter, the terminal device TM is described as a smartphone.

The server device SV is for example a computer that is managed by the manufacturer of the inhalation device 100 (in other words, the power supply unit 110) and that distributes firmware for the power supply unit 110 over the network described above. Note that the server SV may be a virtual server (cloud server) realized in a cloud computing service, or may be a physical server realized as a single device.

As shown in Fig. 13, the server device SV has, for example, a firmware database DB that associates power source IDs with firmware that enables the use of the power source unit 111 identified by the power source ID. In the firmware database DB shown in Fig. 13, the firmware "FW0001" is associated with the power source ID "AAAAA."

In the information processing system SYS, when the control unit 116 of the inhalation device 100 determines that the power source unit 111 after replacement is not compatible with the power supply unit 110 (for example, when the power source ID of the power source unit 111 after replacement is not a predetermined ID), the control unit 116 of the inhalation device 100 transmits a firmware acquisition request including power source ID information indicating the power source ID of the power source unit 111 after replacement via the communication unit 115 to the terminal device TM (in Fig 13, see arrow indicated by reference sign S11).

The control unit 116 may also wait for a predetermined action by the user before sending a firmware acquisition request to the terminal device TM. For example, when there is a predetermined user action on the terminal device TM (for example, tapping of the "FW Update Start" icon provided on the display screen of the terminal device TM), the terminal device TM notifies the control unit 116 of the inhalation device 100 to that effect. The control unit 116 may, triggered by receipt of this notification, send a firmware acquisition request to the terminal device TM.

After receiving the firmware acquisition request from the inhalation device 100, the terminal device TM transmits to the server device SV, over the network, a firmware delivery request including the power source ID information indicating the power source ID of the power source unit 111 after replacement (see arrow in Fig. 13 with the reference sign S12).

The server device SV that has received the firmware distribution request from the terminal device TM refers to the power source ID information included in the firmware distribution request and retrieves the firmware corresponding to the power source ID from the firmware database DB. Then, if the corresponding firmware is found, the server device SV sends the retrieved firmware to the terminal device TM from which the firmware distribution was requested (see arrow in Fig. 13 with the reference sign S13).

After receiving the firmware from the server device SV, the terminal device TM stores this firmware in a memory (not shown on the drawings) provided by its own device, or the like. The terminal device TM then transmits the firmware received from the server device SV to the inhalation device 100 that has requested the firmware acquisition (see arrow in Fig. 13 with the reference sign S14).

The control unit 116 of the inhalation device 100 that receives the firmware from the terminal device TM updates the firmware of the inhalation device 100 (and more specifically the power supply unit 110) to the firmware received from the terminal device TM. Specifically, the control unit 116 modifies, for example, parameters used to acquire information about the power source unit 111, parameters used to control the discharge from the power source unit 111 or the charging of the power source unit 111, by updating the firmware. This enables the power source unit 111 after replacement to be used in the power supply unit 110.

The parameters subject to change by the firmware update may, for example, include the aforementioned heating authorization threshold. In other words, by updating the firmware, the control unit 116 may rewrite the heating authorization threshold table TBL. The parameters to be changed by the firmware update include, for example, a threshold parameter used to determine whether the power source unit 111 is in a discharged state (deep discharged state), a parameter representing the Open Circuit Voltage (OCV) used by the battery level gauge IC 1162 to derive the remaining battery charge Cbat, and a threshold parameter used by the protection IC 1114 to determine whether to stop the discharge or charging of the power source unit 111.

Also, the inhalation device 100 may prohibit some operations such as heating by the heating unit 121 or charging the power source unit 111 if the operation check determines that the power source unit 111 after replacement is not compatible with the power supply unit 110. The control unit 116, for example, removes such a prohibition on some such operations when the firmware update is complete. This enables the power supply unit 110 (in other words, the inhalation device 100) to operate normally when the power source unit 111 after replacement is made compatible with the power supply unit 110 by updating the firmware, thereby improving user convenience.

The control unit 116 may also notify the user via the notification unit 113, for example, that the firmware update is in progress, and when the firmware update is complete, may notify the user that the firmware update is complete. In this way, the user can be informed of the operational state of the inhalation device 100 (in other words, the power supply unit 110) during the firmware update, thereby improving user convenience.

Also, the control unit 116 may, for example, by the operation check, determine that the power source unit 111 after replacement is not compatible with the power supply unit 110, and may notify the user via the notification unit 113 that a firmware update is required to use the power source unit 111 after replacement. Then, the control unit 116 may, after the notification, send the firmware acquisition request to the terminal device TM if the user performs a predetermined operation, thereby updating the firmware of the power supply unit 110.

Embodiments of the power supply unit for an aerosol generating device according to the present disclosure have been described above, but it goes without saying that the present invention is not limited to such embodiments. It is obvious that a person skilled in the art will be able to conceive of a number of variant examples or modified examples within the scope disclosed in the claims, and any such variant examples or modified examples are naturally understood to fall within the technical scope of the present disclosure. Furthermore, the components in the embodiments described above may be combined in any way within a scope that does not depart from the essential point of the invention.

Furthermore, the control method described in the embodiments above can be realized by executing a pre-prepared program on a computer. This program is stored on a computer-readable storage medium and is run by being read out from the storage medium. The program may also be provided in a form stored in a non-volatile (non-transitory) storage medium such as a flash memory, or may be provided over a network such as the Internet. Furthermore, the computer that executes this program was the control unit 116 in this embodiment, but is not limited thereto. For example, the computer executing the program may be, for example, included in the inhalation device 100, but this is not limiting, and the computer may also be included in another device capable of communicating with the inhalation device 100.

The present specification, etc. sets forth at least the following features. Corresponding components, etc. in the embodiments described above are shown by way of example in parentheses, but there is no limitation to such components.

(1) A power supply unit (power supply unit 110, 100A, 100B) for an aerosol generating device (inhalation device 100, 100A, 100B) for generating an aerosol from an aerosol source, the power supply unit comprising:
   a connection portion (connection portion 20x, positive terminal connection 20a, negative terminal connection 20b, temperature connection 20c, positive terminal 90a, negative terminal 90b, temperature terminal 90c) to which can be connected a power source unit (power source unit 111, 111A, 111B) capable of storing power and configured to be detachable from the power supply unit; and
   a control unit (control unit 116, 116A, 116B, MCU 1161, battery level gauge IC 1162) that performs a predetermined operation check and controls operation of the power supply unit based on the result of the operation check when the power source unit connected to the connection portion is replaced,
   characterized in that
   in the operation check, the control unit is configured to
   obtain information about the power source unit after replacement, and
   detect, based on the information relating to the power source unit after replacement, faults relating to the power source unit after replacement and/or faults relating to the connection portion connected to the power source unit after replacement.

According to (1), when a power source unit capable of storing power and configured to be detachable from the power supply unit is replaced, and when a fault with the power source unit after replacement and/or a fault with the connection portion of the power supply unit connected to the power supply unit after replacement is detected, an action can be performed based on the result of the detection. In this way, the safety of the power supply unit can be improved, or the user convenience can be improved.

(2) The power supply unit for an aerosol generating device as disclosed in (1), characterized in that
the control unit performs the operation check in response to the power source unit connected to the connection portion being replaced.

According to (2), it is possible to perform the operation check automatically using replacement of the power source unit as a trigger. Therefore, it is possible to reduce the user's time and effort required to perform the operation check compared with the case where operations other than replacement of the power source unit are required to perform the operation check.

(3) The power supply unit for an aerosol generating device as disclosed in (1), characterized in that
the control unit performs the operation check in response to a predetermined action by a user after the power source unit connected to the connection portion has been replaced.

According to (3), the operation check can be carried out waiting for the predetermined operation by the user to be performed after the power source unit has been replaced. In this way, it is possible to eliminate the increase of power consumption due to repeated operation checks even if the user repeatedly attaches and detaches the power source unit when replacing the power source unit.

(4) The power supply unit for an aerosol generating device as disclosed in any of (1) to (3), characterized in that
when a fault is detected by the operation check, the control unit stops at least a portion of the operation of the power supply unit.

According to (4), it is possible to prevent the inconvenience of the power supply unit being allowed to operate normally with all its functions enabled, even if there is some fault in the power source unit or its connections.

(5) The power supply unit for an aerosol generating device as disclosed in (4), characterized in that
the power supply unit is configured to enable the supply of power from the power source unit to a heating unit (heating unit 121, 121A, 121B) which, when powered, heats the aerosol source to generate the aerosol, and
the portion of the operations includes powering the heating unit from the power source unit.

According to (5), it is possible to prevent inconvenience such as power being supplied to the heating unit, which handles large power, after replacement of the power source unit, even though there is a fault with the power source unit or the connection portion.

(6) The power source unit for an aerosol generating device as disclosed in (4) or (5), characterized in that
the power supply unit is configured to charge the power source unit by supplying power received from an external power source to the power source unit connected to the connection part, and
the portion of the operations includes charging of the power source unit.

According to (6), it is possible to prevent the occurrence of inconvenience such as power supply to the power source unit after replacement of the power source unit, even if there is some fault with the power source unit or the connection portion.

(7) The power supply unit for an aerosol generating device as disclosed in any of (4) to (6), characterized in that
when a fault is detected by the operation check, the control unit notifies the user of the fault and/or a recommendation corresponding to the fault via a notification unit (notification unit 113, 113A, 113B) that is capable of notifying the user.

According to (7), informing the user of the detected fault and/or recommendation in accordance with the detected fault enables the user to take appropriate action to rectify the fault.

(8) The power supply unit for an aerosol generating device as disclosed in any of (1) to (7), characterized in that
information relating to the power source unit after replacement includes information indicative of the remaining amount in the power source unit after replacement, and
in the operation check, the control unit detects a fault if the remaining amount is not greater than or equal to a threshold value based on the information indicative of the remaining amount in the power source unit after replacement.

According to (8), it is possible to prevent the occurrence of inconvenience such as the power of the power source unit being depleted due to operating the power supply unit as usual even though there is insufficient remaining amount in the power source unit after replacement.

(9) The power supply unit for an aerosol generating device as disclosed in (8), characterized in that
the power supply unit is configured to be able to supply power from the power source unit to the heating unit that generates the aerosol by heating the aerosol source, and
the threshold is set based on the power required to generate the aerosol.

According to (9), it is possible to prevent the occurrence of the situation in which the generation of aerosol after replacement of the power source unit is interrupted in the middle due to insufficient remaining amount in the power source unit after the replacement.

(10) The power supply unit for an aerosol generating device as disclosed in any of (1) to (9), characterized in that
the information relating to the power source unit after replacement includes information indicative of the output voltage of the power source unit after replacement, and
in the operation check, the control unit detects the fault if the output voltage is not within a predetermined range based on the information indicative of the output voltage of the power source unit after replacement.

According to (10), it is possible to prevent the inconvenience of operating the power supply unit as normal even though the power source unit after replacement is not compatible with the power supply unit.

(11) The power supply unit for an aerosol generating device as disclosed in any of (1) to (10), characterized in that
the information relating to the power source unit after replacement includes information indicative of the health of the power source unit after replacement, and
in the operation check, the control unit detects a fault if the health is not greater than or equal to a threshold value based on the information indicative of the health of the power source unit after replacement.

According to (11), it is possible to prevent the occurrence of inconvenience such as operating the power supply unit as normal even though the power source unit after replacement is already degraded (in other words, performance is reduced).

(12) The power supply unit for an aerosol generating device as disclosed in any of (1) to (11), characterized in that
the information relating to the power source unit after replacement includes information indicative of the connection status between the power source unit after replacement and the connection portion, and
in the operation check, the control unit detects a fault if the connection state is not normal based on information indicative of the connection state between the power source unit after replacement and the connection portion.

According to (12), it is possible to prevent the inconvenience of operating the power supply unit as normal even though the power source unit is not properly connected.

(13) The power supply unit for an aerosol generating device as disclosed in any of (1) to (12), characterized in that
the information relating to the power source unit after replacement includes information indicative of the presence or absence of a short circuit in the connection portion connected with the power source unit after replacement, and
in the operation check, the control unit detects a fault if there is a short circuit in the connection portion based on information indicative of the presence or absence of the short circuit.

According to (13), it is possible to prevent inconvenience such as operating the power supply unit as normal even though a short circuit has occurred in the connection portion connected to the power source unit after replacement.

### REFERENCE SIGNS LIST

100, 100A, 100B Inhalation device (aerosol generating device)
110, 110B Power supply unit
111, 111A, 111B Power source unit
113, 113A, 113B Heating unit
116, 116A, 116B Control unit
1161 MCU (control unit)
1162 Battery level gauge IC (control unit)
121, 121A, 121B Heating unit
20x Connection portion
20A Positive terminal connection (connection portion)
20B Negative terminal connection (connection portion)
20C Temperature connection (connection portion)
90A Positive terminal (connection portion)
90B Negative terminal (connection portion)
90C Temperature terminal (connection portion)

## Claims

1. A power supply unit for an aerosol generating device for generating an aerosol by heating an aerosol source, the power supply unit comprising:
a connection portion to which is connected a power source unit configured to store power and configured to be attachable to and detachable from the power supply unit; and
a control unit that performs a predetermined operation check and controls operation of the power supply unit based on the result of the operation check when the power source unit connected to the connection portion is replaced,
**characterized in that**
in the operation check, the control unit is configured to
obtain information about the power source unit after replacement, and
detect, based on the information relating to the power source unit after replacement, faults relating to the power source unit after replacement and/or faults relating to the connection portion connected to the power source unit after replacement.

2. The power supply unit for an aerosol generating device as claimed in claim 1, **characterized in that**
the control unit performs the operation check in response to the power source unit connected to the connection portion being replaced.

3. The power supply unit for an aerosol generating device as claimed in claim 1, **characterized in that**
the control unit performs the operation check in response to a predetermined action by a user after the power source unit connected to the connection portion has been replaced.

4. The power source unit for an aerosol generating device as claimed in any one of claims 1 to 3, **characterized in that**
when a fault is detected by the operation check, the control unit stops at least a portion of the operation of the power supply unit.

5. The power supply unit for an aerosol generating device as claimed in claim 4, **characterized in that**
the power supply unit is configured to enable the supply of power from the power source unit to a heating unit which, when powered, heats the aerosol source to generate the aerosol, and the portion of the operations includes powering the heating unit from the power source unit.

6. The power source unit for an aerosol generating device as claimed in claim 4 or 5, **characterized in that**
the power supply unit is configured to charge the power source unit by supplying power received from an external power source to the power source unit connected to the connection part, and
the portion of the operations includes charging of the power source unit.

7. The power source unit for an aerosol generating device as claimed in any one of claims 4 to 6, **characterized in that**
when a fault is detected by the operation check, the control unit notifies the user of the fault and/or a recommendation corresponding to the fault via a notification unit that is capable of notifying the user.

8. The power source unit for an aerosol generating device as claimed in any one of claims 1 to 7, **characterized in that**
information relating to the power source unit after replacement includes information indicative of the remaining amount in the power source unit after replacement, and
in the operation check, the control unit detects a fault if the remaining amount is not greater than or equal to a threshold value based on the information indicative of the remaining amount in the power source unit after replacement.

9. The power supply unit for an aerosol generating device as claimed in claim 8, **characterized in that**
the power supply unit is configured to be able to supply power from the power source unit to the heating unit that generates the aerosol by heating the aerosol source, and
the threshold is set based on the power required to generate the aerosol.

10. The power source unit for an aerosol generating device as claimed in any one of claims 1 to 9, **characterized in that**
the information relating to the power source unit after replacement includes information indicative of the output voltage of the power source unit after replacement, and
in the operation check, the control unit detects the fault if the output voltage is not within a predetermined range based on the information indicative of the output voltage of the power source unit after replacement.

11. The power source unit for an aerosol generating device as claimed in any one of claims 1 to 10, **characterized in that**
the information relating to the power source unit after replacement includes information indicative of the health of the power source unit after replacement, and
in the operation check, the control unit detects a fault if the health is not greater than or equal to a threshold value based on the information indicative of the health of the power source unit after replacement.

12. The power source unit for an aerosol generating device as claimed in any one of claims 1 to 11, **characterized in that**
the information relating to the power source unit after replacement includes information indicative of the connection status between the power source unit after replacement and the connection portion, and
in the operation check, the control unit detects a fault if the connection state is not normal based on information indicative of the connection state between the power source unit after replacement and the connection portion.

13. The power source unit for an aerosol generating device as claimed in any one of claims 1 to 12, **characterized in that**
the information relating to the power source unit after replacement includes information indicative of the presence or absence of a short circuit in the connection portion connected with the power source unit after replacement, and
in the operation check, the control unit detects a fault if there is a short circuit in the connection portion based on information indicative of the presence or absence of the short circuit.
